(19) Europäisches Patentamt
European Patent Office
Office européen des brevets

(11) EP 2 483 357 B1

# (12) EUROPÄISCHE PATENTSCHRIFT

(45) Veröffentlichungstag und Bekanntmachung des Hinweises auf die Patenterteilung:
**22.07.2015 Patentblatt 2015/30**

(21) Anmeldenummer: **10743185.0**

(22) Anmeldetag: **20.08.2010**

(51) Int Cl.:
***C09C 1/30*** (2006.01) ***C09D 7/00*** (2006.01)

(86) Internationale Anmeldenummer:
**PCT/EP2010/062175**

(87) Internationale Veröffentlichungsnummer:
**WO 2011/038992 (07.04.2011 Gazette 2011/14)**

# (54) OBERFLÄCHENMODIFIZIERTE KIESELSÄURE SEMI-GELE

SURFACE-MODIFIED SILICA SEMI-GELS

SEMI-GELS DE SILICE À SURFACE MODIFIÉE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009 DE 102009045109**

(43) Veröffentlichungstag der Anmeldung:
**08.08.2012 Patentblatt 2012/32**

(73) Patentinhaber: **Evonik Degussa GmbH**
**45128 Essen (DE)**

(72) Erfinder:
- **LINDNER, Gottlieb**
**53175 Bonn (DE)**
- **CHRISTIAN, Hans, Dieter**
**88662 Überlingen (DE)**

(56) Entgegenhaltungen:
**EP-A2- 1 607 448**
**DE-A1-102004 012 090**
**US-A- 4 285 846**
**US-A- 5 094 839**

- **DATABASE CA [Online] CHEMICAL ABSTRACTS SERVICE, COLUMBUS, OHIO, US; UEDA, ICHIRO ET AL: "Vinyl chloride resin foams having solid random patterns", XP002612503, gefunden im STN Database accession no. 83:180633 & JP 50 070468 A (NIPPON KAKOH SEISHI K. K., JAPAN) 11. Juni 1975 (1975-06-11)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 483 357 B1

Printed by Jouve, 75001 PARIS (FR)

## Beschreibung

Die vorliegende Erfindung betrifft neue oberflächenmodifizierte Semi-Gele, ein Verfahren zu deren Herstellung sowie deren Verwendung.

Anorganische Oxide auf Basis von $SiO_2$ werden auf Grund ihres Herstellungsverfahrens und ihrer Eigenschaften unterteilt in pyrogene Kieselsäuren (Aerosile), gefällte Kieselsäuren, Kieselsole, Silicagele (Kieselgele) und Semi-Gele.

Bei Silicagelen unterscheidet man zwischen Hydrogelen, Aerogelen und Xerogelen. Hydrogele - oder auch Aquagele - werden in Wasser hergestellt, daher sind ihre Poren mit Wasser gefüllt. Ein Xerogel ist ein Hydrogel, aus dem das Wasser entfernt wurde. Ein Aerogel ist ein Xerogel, aus dem die Flüssigkeit so entfernt wurde, dass sich die Struktur des Gels nur minimal verändert und das Porenvolumen weitgehend erhalten bleibt.

Silicagele sind lange bekannt (Iler, "Chemistry of Silica", S. 462 ff, 1979). Sie werden unter Bedingungen hergestellt, die ein Zusammenwachsen von Primärpartikeln (mittlere Partikelgröße bei 1 bis 10 nm) fördern, so dass sich im Gegensatz zu gefällten oder pyrogenen Kieselsäuren ein relativ starres dreidimensionales Netzwerk ausbildet. Daher unterscheiden sich Silicagelpartikel eindeutig von gefällten Kieselsäurepartikeln.

Die Herstellung von Silicagelen ist dem Fachmann wohl bekannt, siehe zum Beispiel US 4,097,303, DE 41 32 230, EP 0 384 226. Dabei werden Natriumsilikat und Schwefelsäure schnell und kontinuierlich bei niedrigen Temperaturen, niedrigem pH und hohen Konzentrationen miteinander vermischt, um ein Hydrosol zu bilden das wiederum nach kurzer Zeit zum Hydrogel kondensiert. Alternativ kann die Gelierung auch im Alkalischen erfolgen (siehe zum Beispiel GB 1,219,877, GB 1,279,250, WO9825 851 oder EP 0 588 497). Eine weitere Alternative wird in EP 0 765 764 vorgeschlagen.

Das entstandene Hydrogel wird in relativ kleine Stücke gebrochen und gewaschen, um lösliche Salze und Verunreinigungen zu entfernen. Während des Waschzyklus wird die Porenstruktur des Hydrogels durch Variation von pH-Wert (z. B. Zugabe von Basen wie z. B. Ammoniak), Temperatur und Zeit eingestellt. Die Vorgehensweise ist dem Fachmann wohlbekannt. Beispiele sind z.B. EP 0 384 226 oder WO00002814 zu entnehmen.

Im Anschluss an den Waschzyklus wird das gewaschene Hydrogel durch thermische Mittel getrocknet, um ein Silicagel bzw. Xerogel zu bilden. Die Art und Weise der Trocknung hat wesentlichen Einfluss auf das Porenvolumen des Silicagels. Bei schneller Trocknung kann das Porenvolumen weitestgehend erhalten werden, bei langsamer Trocknung verringert sich das Porenvolumen. Abschließend kann das Silicagel zu einer spezifischen Partikelgröße und -verteilung zerkleinert oder vermahlen werden.

Pyrogene Kieselsäuren unterscheiden sich von Silicagelen dadurch, dass pyrogene Kieselsäuren aus Aggregaten von Primärpartikeln aufgebaut sind, während Silica-Gele ein dreidimensionales Netzwerk von Primärpartikeln aufweisen. Besagte Strukturunterschiede werden durch das Herstellungsverfahren bedingt. Detaillierte Informationen über die Struktur von pyrogenen Kieselsäuren finden sich Kirk-Othmers Encyclopedia of Chemistry, Seite 776.

Gefällte Kieselsäuren weisen eine nochmals andere Struktur auf welche neben Aggregaten vor allem auch durch Agglomerate gekennzeichnet ist. Sie werden erhalten durch das so genannte "Nassverfahren", wobei Wasserglas und Säuren so umgesetzt werden, dass Aggregates und Agglomerate gebildet werden können und nicht wie bei Gelen oder gelartigen Produkten dreidimensionale Netzwerke von Primärpartikeln. Die strukturellen Unterschiede zwischen gefällten Kieselsäuren und pyrogenen Kieselsäuren werden beschrieben in Kirk-Othmers Encyclopedia of Chemistry.

Eine vierte Variante der amorphen Siliciumdioxide stellen die Semi-Gele dar. Semi-Gele weisen im Vergleich zu Silicagelen eine breitere Porengrößenverteilung, eine niedrigere mechanische Stabilität und eine andere fraktale Dimension (3-D-Netzwerke) auf. Im vergleich zu gefällten Kieselsäuren weisen Sie hingegen eine engere Porengrößenverteilung auf, so dass Semi-Gele im Hinblick auf die Porengrößenverteilung zwischen Silicagelen und gefällten Kieselsäuren anzusiedeln sind.

Auch vom Herstellungsverfahren gibt es Unterschiede. So werden Silicagele wie oben beschrieben bei einer konstanten Konzentration von gelöster colloidaler Silica hergestellt. Dabei werden Wasserglas und Säure so gemischt, dass keine Konzentrationsänderungen mehr auftreten. Nach optionaler Alterung erhält man so Silicagele in mehr oder weniger großen Blöcken.

Semi-Gele werden hingegen unter konstantem Rühren bzw. Einringung von Scherenergie hergestellt, wobei die $SiO_2$-Konzentration während der Reaktion erhöht wird, so dass am Ende kein "Block" sondern eher partikuläre Strukturen erhalten werden. Semi-Gele werden z. B. von der Firma Beijing Aerospace Sai De Power Material Technical Company Ltd., Yuquan Road No.16, Haidian District, Beijing (China) vertrieben.

Sowohl gefällte Kieselsäuren als auch Silicagele werden als Mattierungsmittel in Lacken eingesetzt. In der US 4,285,846 wird auch die Verwendung von Semi-Gelen als Mattierungsmittel offenbart.

Neben dem Vorteil der Reduzierung des Glanzes von Lacken führt die Verwendung von Mattierungsmitteln in Lacken aber auch zu Problemen. So wird in einigen Lacksystemen durch die Zugabe des Mattierungsmittels deren Viskosität unerwünscht erhöht. Wie in EP 0 442 325 beschrieben, sind besonders thixotrope, konventionelle lösemittelhaltige Alkydlacke im Hinblick auf ihre rheologischen Eigenschaften schwierig zu mattieren. Insbesondere trifft dies auf wässrige Lacksysteme auf Acrylat-, Acrylat-Polyurethan oder entsprechende Hybridsysteme zu.

Ein weiteres bei Mattierungsmitteln häufig beobachtetes Problem ist, dass sie zur Sedimentation neigen. Um das Sedimentieren von Mattierungsmitteln in Lacken zu vermeiden, werden die Oberfläche der meisten der handelsüblichen Mattierungsmittel mit einem oberflächenmodifizierenden Agens belegt. Dabei werden organischen Komponenten an die $SiO_2$-Oberfläche angebunden. Diese Anbindung kann sowohl chemischer Natur sein, so dass echte chemische Bindungen zwischen $SiO_2$-Oberfläche und organischer Komponente bestehen, als auch physikalischer Natur sein, d.h. die organische Komponente ist mittels Van-der-Waals-Wechselwirkungen oder Wasserstoffbrückenbindungen an die $SiO_2$-Oberfläche adsorbiert. Die Oberflächenmodifikation bringt jedoch Probleme mit sich. So haben handelsübliche, oberflächenmodifizierte Mattierungsmittel oft den Nachteil, dass sich die Beschichtung bei Lagerung des Lackes ablösen kann und damit der erwünschte Effekt zumindest teilweise wieder zunichte gemacht wird. Dies kann zu Beeinträchtigungen der Lackeigenschaften führen.

In dem Dokument WO200342293 wird ein Mattierungsmittel offenbart, bei dem ein Silicagel mit Wachs belegt wurde. In

WO/9951692 wird vorgeschlagen, das Silicagel mit einem Harnstoffurethanderivat zu beschichten.

Durch die Belegung eines Silicagels mit einem Polyol gemäß Patentschrift EP 0 442 325 wird ein Mattierungsmittel hergestellt, dass keinen oder nur geringen Einfluss auf das thixotrope Verhalten von Farben und Lacken, die auf polyamid-modifizierten Alkydharzen basieren, hat.

In der DE 102004029069 wird wiederum die Oberflächenmodifikation von Silicagelen mit Organopolysiloxanen und in der DE 102004012090 die Oberflächenmodifikation von gefällten Kieselsäuren mit Organopolysiloxanen offenbart.

Die US 4,285,846 beschreibt Mattierungsmittel auf der Basis von pyrogenen Kieselsäuren.

Aus EP 1 607 448 sind oberflächenmodifizierte_Silicagele bekannt, jedoch keine Semi-Gele.

Ferner wird in DE 102004012090die Modifikation von Fällungskieselsäuren beschrieben.

Bezüglich Semi-Gelen ist bislang lediglich die Oberflächenmodifikation Waxen bekannt. Entsprechende Produkte werden von der Firma Beijing Aerospace Sai De Power Material Technical Company Ltd., Yuquan Road No.16, Haidian District, Beijing (China) vertrieben.

Für unterschiedliche Anwendungen gibt es eine Vielzahl unterschiedlicher Lacke und unterschiedlicher Lackzusammensetzung. Um hierbei eine noch größere Flexibilität und Verbesserung der Anwendungseigenschaften der Lacke zu ermöglichen besteht ein kontinuierlicher Bedarf an neuen, alternativen Mattierungsmitteln.

Aufgabe der vorliegenden Erfindung war es daher neue, oberflächenmodifizierte Semi-Gele bereitzustellen, welche als Mattierungsmittel in Lacken eingesetzt werden können. Eine spezielle Aufgabe war es neue, oberflächenmodifizierte Semi-Gele bereitzustellen, welche bessere anwendungstechnische Eigenschaften aufweisen als die im Stand der Technik bekannten waxmodifizierten Semi-Gele.

Eine weitere Aufgabe bestand darin ein Verfahren bereitzustellen, mit dem die erfindungsgemäßen oberflächenmodifizierten Semi-Gele hergestellt werden können.

Weitere nicht explizit genannte Aufgaben ergeben sich aus dem Gesamtzusammenhang der nachfolgenden Beschreibung und Beispiele.

Überraschend wurde gefunden, dass diese Aufgaben durch die in der nachfolgenden Beschreibung sowie den Ansprüchen und den Beispielen näher definierten erfindungsgemäßen oberflächenmodifizierten Semi-Gele sowie dem in der Beschreibung, den Beispielen und den Ansprüchen näher beschriebene Verfahren gelöst werden.

Gegenstand der vorliegenden Erfindung sind oberflächenmodifizierte Semi-Gele, wobei das Semi-Gel ein amorphes Siliciumdioxid ist, dadurch gekennzeichnet, dass zumindest Teile die Oberfläche des Semi-gels mit zumindest einem Organopolysiloxan und/oder zumindest einem modifizierten Organopolysiloxan modifiziert sind,
und dass sie

- eine BET-Oberfläche von 200 bis 400 $m^2/g$, bevorzugt von 210 bis 350 $m^2/g$,
- ein meso-Porenvolumen für Poren mit einem Durchmesser von 2 - 30 nm von 0,95 bis 1,5 ml/g, bevorzugt von 1,0 bis 1,4 ml/g,
- ein meso-Porenvolumen für Poren mit einem Durchmesser von 2 - 50 nm von 1,2 bis 1,8 ml/g, bevorzugt von 1,3 bis 1,7 ml/g,
- ein Porenmaximum im Bereich von 10 bis 50 nm von 15 bis 45 nm,

aufweisen.

Ebenfalls Gegenstand der vorliegenden Erfindung sind Verfahren, mit dem die erfindungsgemäßen oberflächen-modifizierte Semi-Gele hergestellt werden können, dadurch gekennzeichnet, dass die Oberfläche eines Semi-Gels mit zumindest einem Organopolysiloxan und/oder zumindest einem modifizierten Organopolysiloxan in Kontakt gebracht wird.

Gegenstand der Erfindung ist schließlich die Verwendung der erfindungsgemäßen oberflächenmodifizierten Semi-Gele, insbesondere als Mattierungsmittel in Farben und Lacken.

Die erfindungsgemäßen oberflächenmodifizierten Semi-Gele weisen unter anderem die folgenden Vorteile

gegenüber handelsüblichen Mattierungsmitteln auf $SiO_2$-Basis auf:

Mattierungsmittel auf Basis von Semigelen weisen gegenüber Mattierungsmitteln auf Basis von Fällungskieselsäuren vorteile im Bereich Coil Coating auf, da sie transparenter sind.

Semigele welche mit Polysiloxanen beschichtet sind weisen gegenüber Wachsbeschichteten Siliciumdioxiden den Vorteil auf, dass das Oberflächenmodifizierungsagens durch eine echte chemische Bindung und nicht durch physikalische Effekte angebunden ist. Somit besteht eine geringere Gefahr der Ablösung des Oberflächenmodifizierungsagens. Ferner können sehr dünne Siloxanschichten aud dem Semigel realisiert werden, was zu ökonomischen Vorteilen führt.

Erfindungsgemäße Semigele mit Kohlenstoff-Kohlenstoff Mehrfachbindungen im Polysiloxan weisen besondere vorteile bei der der Verwendung in UV-Beschichtungsmitteln wie z. B. UV-Lacken auf. Diese Systeme können mit den erfindungsgemäßen Produkten deutlich besser mattiert werden als mit handelsüblichen Mattierungsmitteln auf Basis von Siliciumdioxid. Ohne an eine bestimmte Theorie gebunden zu sein sind die Erfinder der Ansicht, dass die Mehrfachbindung bei der Aushärtung mit vernetzt und somit für eine besonders gute Anbindung sorgt.

Die vorliegenden Erfindung wird nachfolgend im Detail beschrieben. Zuvor werden jedoch einige wichtige Begriffe definiert.

Unter dem Begriff Silicagel (Kieselgel) im Sinne der vorliegenden Erfindung sind anorganische Oxide auf Basis von $SiO_2$ zu verstehen, die über einen Gelprozess hergestellt werden. Silicagele unterteilen sich in die Gruppe der Hydrogele, der Aerogele und der Xerogele. Hydrogele - oder auch Aquagele - werden in Wasser hergestellt, daher sind ihre Poren mit Wasser gefüllt. Ein Xerogel ist ein Hydrogel, aus dem das Wasser entfernt wurde. Ein Aerogel ist ein Xerogel, aus dem die Flüssigkeit so entfernt wurde, dass sich die Struktur des Gels nur minimal verändert und das Porenvolumen weitgehend erhalten bleibt.

Unter Semi-Gelen werden amorphe Siliciumdioxide verstanden, welche im Vergleich zu Silicagelen eine breitere Porengrößenverteilung und im Vergleich zu gefällten Kieselsäuren eine engere Porengrößenverteilung aufweisen, so dass Semi-Gele im Hinblick auf die Porengrößenverteilung zwischen Silicagelen und gefällten Kieselsäuren anzusiedeln sind.

Unter Oberflächenmodifizierung ist die chemische und/oder physikalische Anbindung von Organopolysiloxanen und/oder modifizierten Organopolysiloxanen zu verstehen. D. h. bei oberflächenmodifizierten Semi-Gelen ist zumindest ein Teil der Oberfläche von zumindest einem Teil der Semi-Gelpartikel mit dem oberflächenmodifizierenden Mittel belegt.

Die Begriffe Organopolysiloxan und Polyorganosiloxan bzw. modifiziertes Organopolysiloxan und modifiziertes Polyorganosiloxan werden jeweils synonym verwendet.

Die erfindungsgemäßen oberflächenmodifizierten Semi-Gele sind dadurch gekennzeichnet, dass zumindest Teile der Oberfläche des Semi-Gels mit zumindest einem Organopolysiloxan und/oder zumindest einem modifizierten Organopolysiloxan modifiziert sind.

Die erfindungsgemäßen oberflächenmodifizierten Semi-Gele weisen zudem bevorzugt die folgenden physikalisch-chemischen Parameter auf:

Die BET-Oberfläche beeinflusst die Oberflächenaktivität des Semigels und somit die Stabilisierung des Netzwerks innerhalb des Lacksystems, was wiederum Einfluß auf dessen rheologische Eigenschaften, insbesondere die Viskosität hat. Die BET-Oberfläche liegt daher im Bereich von 200 bis 400 $m^2/g$, bevorzugt von 200 bis 350 $m^2/g$, besonders bevorzugt von 200 bis 300 $m^2/g$.

Die Porenstruktur der erfindungsgemäßen Semi-Gele beeinflusst wesentlich deren Wechselwirkungen mit dem Lacksystem. Sind die Poren zu klein bzw. das Porenvolumen zu gering, so ist eine hinreichende Eindringung der Polymerkomponenten des Lacks nicht möglich, d.h. es sind kaum Wechselwirkungen vorhanden. Sind die Poren hingegen zu groß, so sind die Wechselwirkungen ebenfalls zu schwach, da die Polymere wider leicht aus den Poren herausgelöst werden können. Die erfindungsgemäßen Semigele weisen daher folgende Porencharakteristika auf:

- ein meso-Porenvolumen für Poren mit einem Durchmesser von 2 - 30 nm von 0,7 bis 1,5 ml/g, bevorzugt 0,95 bis 1,4 ml/g, bevorzugt von 1,0 bis 1,3 ml/g,
- ein meso-Porenvolumen für Poren mit einem Durchmesser von 2 - 50 nm von 0,9 bis 1,8 ml/g, bevorzugt von 1,0 bis 1,7 ml/g, besonders bevorzugt 1,1 bis 1,6 ml/g
- ein Porenmaximum im Bereich von 10 bis 50 nm, bevorzugt von 15 bis 45 nm, bevorzugt von 15 bis 40 nm und ganz besonders bevorzugt von 20 bis 35 nm.

In speziellen Ausführungsformen weisen die erfindungsgemäßen Semi-Gele bevorzugt zumindest eine der nachfolgenden Eigenschaften auf:

Es hat sich gezeigt, dass die Ölaufnahme DBP der erfindungsgemäßen Semigele in gewissem Umfang mit der Mattierungseffizienz korreliert werden kann. Zudem ist die DBP wichtig um eine optimale Aufnahme von Organopolysiloxan zu gewährleisten. Die Ölabsorption DBP der erfindungsgemäßen Semigele liegt daher bevorzugt im Bereich von 150 - 500 g/100g, besonders bevorzugt 200 - 450 g/100g und speziell bevorzugt 250 - 400 g/100g.

Um eine besonders gute Mattierungswirkung erzielen zu können, gleichzeitig aber auch eine glatte Lackoberfläche zu ermöglichen liegt die mittlere Partikelgröße $d_{50}$ der erfindungsgemäßen oberflächenmodifizierten Siliciumdioxide bevorzugt im Bereich von 1 - 50 μm, besonders bevorzugt 1 - 40 μm, ganz besonders bevorzugt 1 - 30 μm, speziell bevorzugt 2 - 20 μm und ganz speziell bevorzugt 3 - 15 μm. Die mittlere Partikelgröße kann je nach Schichtdicke des Lackes variiert werden.

Das Sedimentationsverhalten der erfindungsgemäßen oberflächenmodifizierten Semi-Gele liegt in der Regel bei 1 bis 2.

Alle genannten Vorzugsbereiche können unabhängig voneinander eingestellt werden.

Die besonderen Eigenschaften der erfindungsgemäßen Semi-Gele sind neben den speziellen physikalisch-chemischen Eigenschaften der Semi-Gele insbesondere auf die zur Oberflächenmodifikation verwendeten Polymere zurückzuführen. Semi-Gele, die die erfindungsgemäßen Eigenschaften zeigen, weisen bevorzugt eine Oberfläche auf, welche mit einem oder mehreren Polyorganosiloxan(en) oder modifizierten Polyorganosiloxan(en) behandelt wurde. Besonders bevorzugt handelt es sich um mit polyether-, acrylat- und/oder polyacrylatmodifizierten Polyorganosiloxanen oder Polyalkoxysiloxanen behandelte Semi-Gele.

In einer besonders bevorzugten Ausführungsform der vorliegenden Erfindung weisen die Semi-Gele eine mit Polyorganosiloxanen der folgenden allgemeinen Struktur:

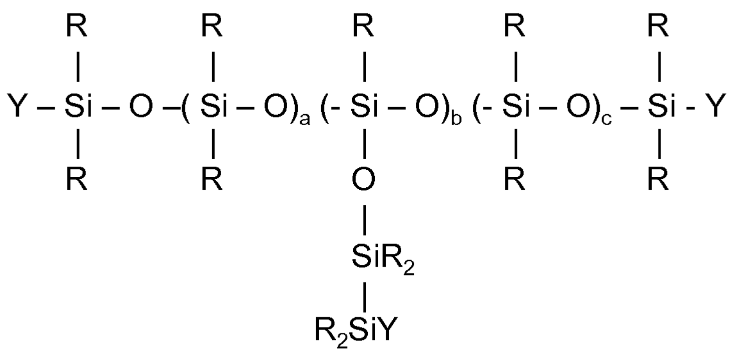

wobei

Y = -OH, -OR oder
Y = $H_5C_2$-O-$(C_2H_4O)_m$-, $H_7C_3$-O-$(C_3H_6O)_m$- oder

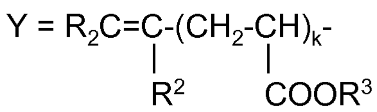

R = -Alkyl insbesondere Methyl
oder Ethyl,
$R^2$ = Alkyl oder H,
$R^3$ = Alkyl,
$R^4$ = H oder Alkyl,
a = 0 - 100, b = 0-100, c= 0-100, d = 0-100,
Summe a + b + c + d gleich oder bevorzugt ungleich 0
m = 0-100 und k = 0-100 ist,

belegte Oberfläche auf.

In einer weiteren bevorzugten Ausführungsform der vorliegenden Erfindung ist die Oberfläche der Semi-Gele mit einem Polyorganosiloxan der folgenden allgemeinen Struktur belegt:

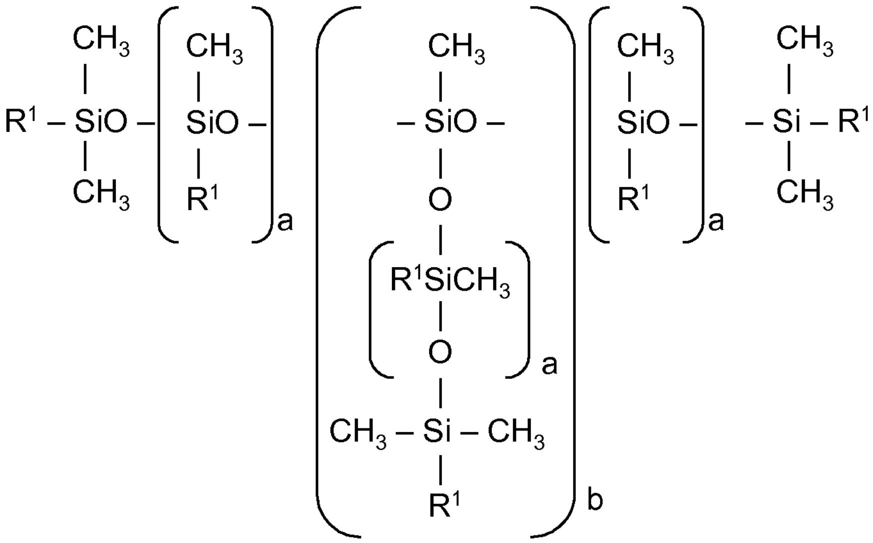

wobei
$R_1$ = ein Methylrest oder

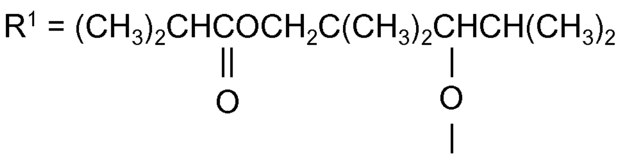

und/oder

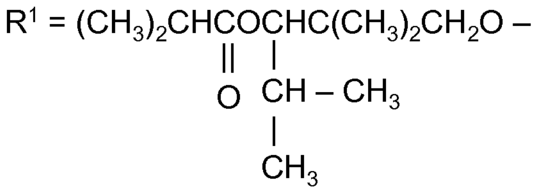

ist und die Summe der Einheiten a = 0 bis 100, die Summe der Einheiten b = 0 bis 15 ist, wobei bei den Resten $R^1$ das Verhältnis von Methyl- zu Alkoxyresten kleiner 50 : 1 ist und b > 1 ist, wenn a = 0 ist und a > 5 ist, wenn b = 0 ist. Nähere Angaben, insbesondere zur Herstellung dieser Polyorganosiloxane sind der DE 36 27 782 A1 zu entnehmen. Der Inhalt dieser Patentanmeldung ist ebenfalls Gegenstand der vorliegenden Anmeldung.

Unter Alkyl-Rest sind gerad- oder verzweigtkettige Alkylreste mit 1 bis 100 C-Atomen, bevorzugt 1 bis 25, besonders bevorzugt 1 bis 10 C-Atome sowie Cycloalkylreste mit 1 bis 15 C-Atomen zu verstehen. Die Alkylreste können eine oder mehrere Doppel- oder Dreifachbindungen enthalten, einzelne Atome können durch Heteroatome wie O, N oder S ersetzt werden.

In einer weiteren bevorzugten Ausführungsform der vorliegenden Erfindung werden Silikonpolytheracrylat-Polymere oder Silikonpolythermethacrylat-Polymere verwendet. Ganz besonders bevorzugt werden Acrylsäureester und/oder Methacrylsäureester von hydroxyfunktionellen Siloxanen und/oder polyalkylenmodifizierten Siloxanen verwendet. Insbesondere bevorzugt werden Organopolysiloxane verwendet, welche durch Ver- oder Umesterung von Acrylsäure und/oder Methacrylsäure oder Acrylsäureestern und/oder Methacrylsäureestern in Anwesenheit eines die Ver- oder Umesterung katalysierenden Enzyms mit hydroxyfunktionellen und/oder polyoxyalkylenmodifizierten Siloxanderivaten der allgemeinen Formel (I)

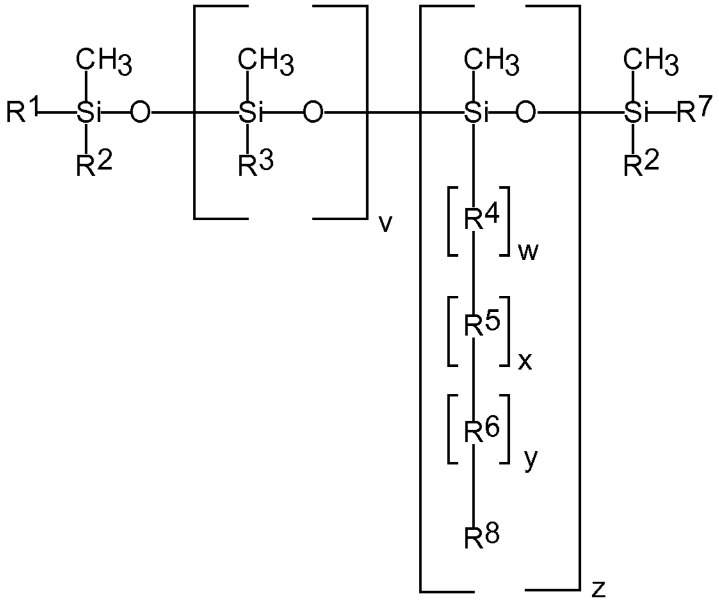

(I)

wobei

$R^1$ und/oder $R^7$ = $R^2$ oder $[R^4]_w$-$[R^5]_x$-$[R^6]_y$-$R^8$,
$R^2$ = $R^3$ oder $\neq R^3$ für gleiche oder verschiedene Alkylreste oder Alkylenreste mit 1 bis 24 Kohlenstoffatomen oder gegebenenfalls substituierte Phenylreste mit bis zu 24 Kohlenstoffatomen steht,
$R^4$ = ein zweiwertiger Rest der Formel O, NH, $NR^2$, S oder ein Rest der Formel $(OSi(CH_3)_2)_u$, wobei
u = 1 bis 200,
$R^5$ = gleiche oder verschiedene Alkylreste oder Alkylenreste mit 1 bis 24 Kohlenstoffatomen, oder

$$C_nH_{2n-f}R^2{}_f\text{-}R^4\text{-}C_mH_{2m-g}R^2{}_g,$$

wobei
f = 0 bis 12,
g = 0 bis 12,
n = 1 bis 18,
m = 1 bis 18,
$R^6$ = $O\text{-}(C_2H_{4-a}R^2{}_aO)_b(C_cH_{2c}O)_d$, wobei
a = 0 bis 3,
b = 0 bis 100,
c = 2 bis 12,
d = 0 bis 100,
die Summe (b + d) = 1 bis 200 ist
und die Reihenfolge der einzelnen Polyoxyalkylensegmente $(C_2H_4\text{-}_aR^2{}_aO)_b$ und $(C_cH_{2c}O)_d$ beliebig sein kann und insbesondere Blockcopolymere, wie statistische Polymere sowie deren Kombinationen, umfaßt, oder
$R^6$ = $O_e\text{-}C_hH_{2h}\text{-}C_iH_{2i-j}R^9{}_j$, wobei
e = 0 oder 1,
h = 0 bis 24,
i = 0 bis 24,
j = 1 bis 3,
die Summe (w + e) = 0 bis 1 ist
und $R^9$ jeweils ein zweiwertiger Rest der Formel O, eine Hydroxygruppe, ein Rest der Formel $C_hH_{2h}$ oder ein Rest der Formel $C_kH_{2k-l}(OH)_l$ bedeutet, wobei
k = 0 bis 24 und
l = 1 bis 3 ist,
$R^8$ = ein Wasserstoffrest oder ein einwertiger organischer Rest ist, wenn y gleich 1 ist, wobei pro Molekül mindestens ein Wasserstoffrest vorhanden sein muß, oder eine OH-Gruppe oder ein einwertiger organischer Rest, wenn y = 0, wobei pro Molekül mindestens eine OH-Gruppe vorhanden ist,

v = 0 bis 200,
w = 0 oder 1,
x = 0 oder 1,
y = 0 oder 1,
z = 0 bis 200
und die Summe (w + x + y) = 1 bis 3
und wenn z = 0 ist, $R^1$ und/oder $R^7$ gleich

$$[R^4]_w\text{-}[R^5]_x\text{-}[R^5]_x\text{-}[R^6]_y\text{-}R^8$$

ist
und wenn x = 0 dann auch w = 0 ist,
erhalten werden.

Es ist dem Fachmann geläufig, daß die Verbindungen in Form eines Gemisches mit einer im wesentlichen durch statistische Gesetze geregelten Verteilung vorliegen. Insbesondere die Werte für die Indices b, d, u, v und z stellen deshalb Mittelwerte dar.

Beispiele von Siloxanderivaten, die erfindungsgemäß durch enzymatisch katalysierte Ver- oder Umesterung von Acryl- und/oder Methacrylsäure oder Acryl- und/oder Methacrylsäureestern umgesetzt werden können, sind:

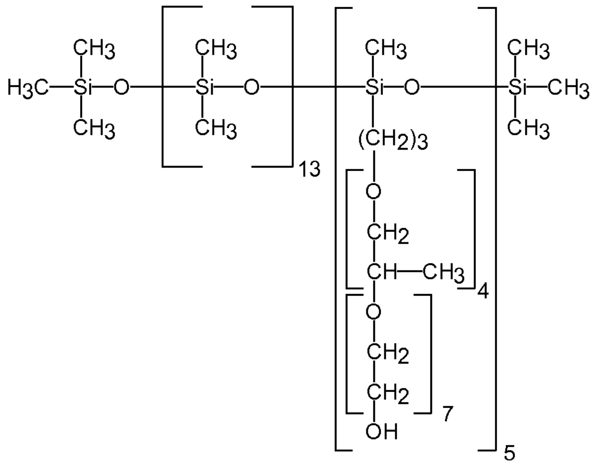

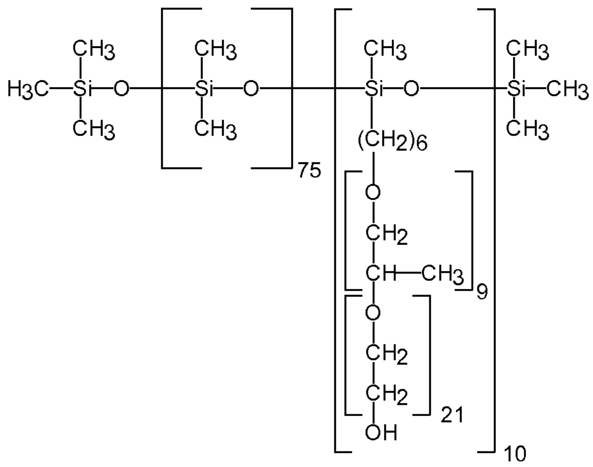

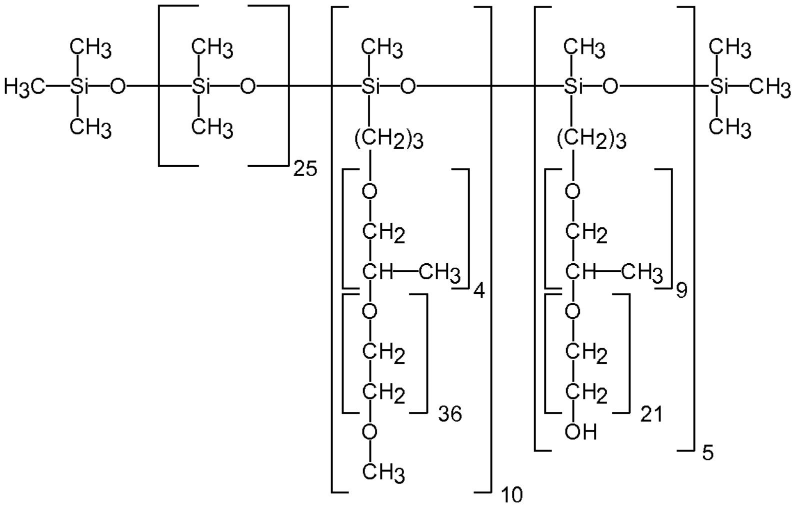

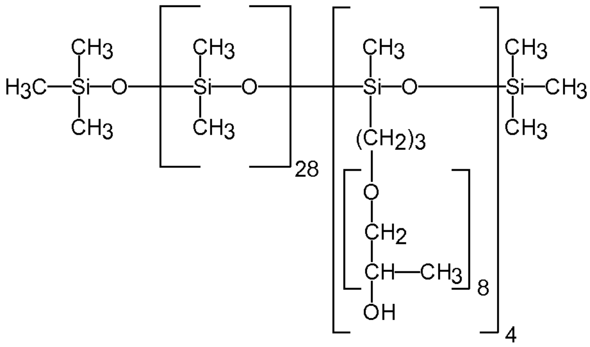

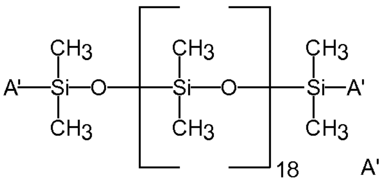

A' = $(CH_2)_3—(OCH_2CH_2)_{12}—(OCH_2CHCH_3)_6—OH$

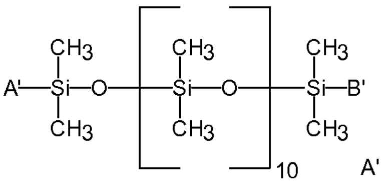

A' = $(CH_2)_3—(OCH_2CH_2)_{12}—(OCH_2CHCH_3)_6—OH$

B' = $(CH_2)_3—(OCH_2CH_2)_6—(OCH_2CHCH_3)_{14}—OCH_3$

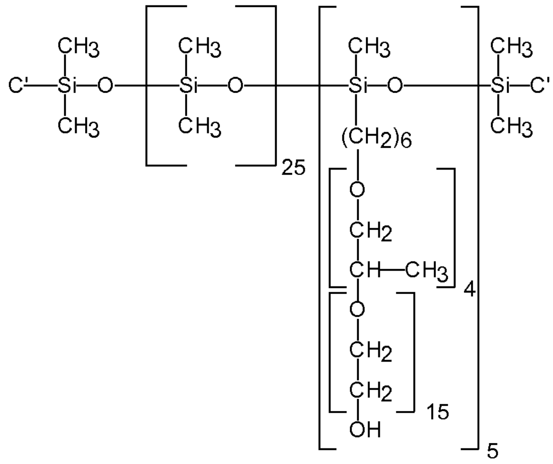

C' = $(CH_2)_3$-$(OCH_2CHCH_3)_4$-$(OCH_2CH_2)_{15}$-OH

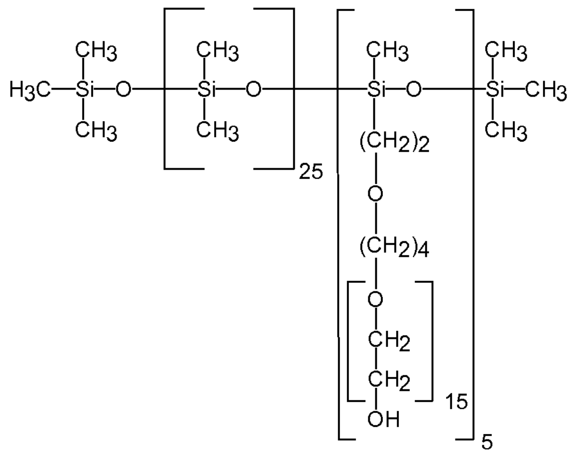

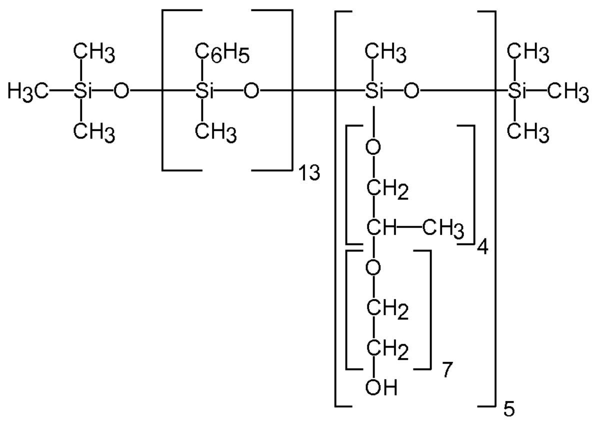

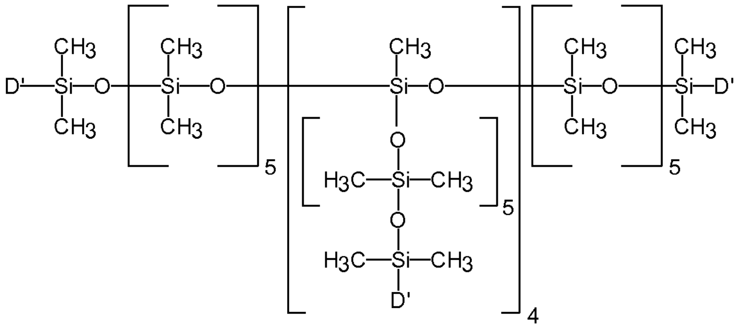

D' = $(OCH_2CHCH_3)_6$-$(OCH_2CH_2)_{20}$-OH

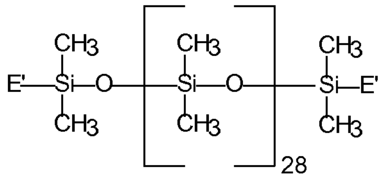

E' = $(O(CH_2)_4)_5$-$(OCH_2CH_2)_3$-OH

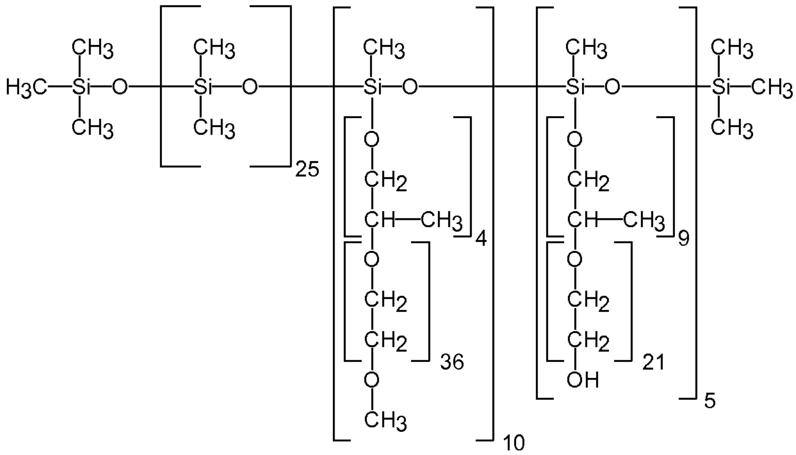

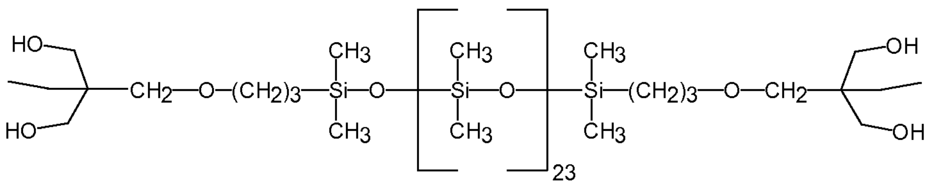

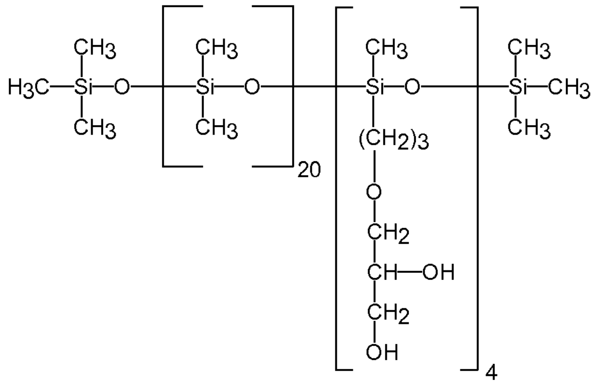

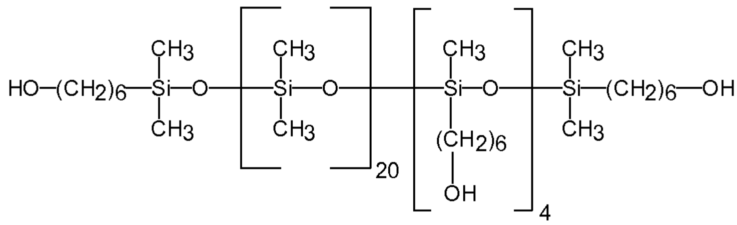

Die enzymatische Ver- oder Umesterung von Acryl- und/oder Methacrylsäure oder Acryl- und/oder Methacrylsäureestern mit den oben genannten Verbindungen bei niedrigen Temperaturen, insbesondere 20 bis 100 °C, bevorzugt 40 bis 70 °C und milden Bedingungen, ist vorteilhaft aufgrund der helleren Farbe des Produkts, der Vermeidung der Bildung von Nebenprodukten, die andernfalls zum Beispiel von chemischen Katalysatoren stammen können, der unkomplizierten Entfernung des Enzymkatalysators vom Produkt und der Vermeidung unerwünschter und unkontrollierter radikalischer Polymerisation der Acryl- und/oder Methacryloylverbindungen.

Die auf diese Weise erhältlichen acryloyl- und/oder methacryloylfunktionellen Siloxanderivate zeichnen sich dadurch aus, daß 5 bis 100 % aller ursprünglich vorhandenen Hydroxygruppen zu einem Acryl- und/oder Methacrylsäureester umgesetzt worden sind.

Die Acrylierung und/oder Methacrylierung verläuft am besten in hohen Ausbeuten mit Estern der Acryl- und/oder Methacrylsäure als Donormoleküle, insbesondere Methyl-, Ethyl- oder Butylmethacrylat und/oder -acrylat.

Enzyme, die bevorzugt als Katalysatoren eingesetzt werden können, sind Hydrolasen, insbesondere Esterasen, Lipasen und Proteasen. Ein konkretes Beispiel hierfür ist Novozym® 435. Die Enzyme können in reiner Form oder in immobilisierter Form auf einem Träger, auf dem sie chemisch oder physikalisch gebunden sind, eingesetzt werden. Die Menge des Enzymkatalysators beträgt insbesondere, bezogen auf das eingesetzte modifizierte Siloxan, 0,1 bis 20 Gew.-%, vorzugsweise 1 bis 10 Gew.-%. Die Reaktionszeit hängt von der verwendeten Menge und der Aktivität des Enzymkatalysators ab und beträgt beispielsweise bis zu 48 Stunden, vorzugsweise bis zu 24 Stunden.

Um unter einfachen Reaktionsbedingungen schnell zu hohen Umsetzungsgraden zu kommen, ist es vorteilhaft, einen Überschuß von wenigstens 10 Gew.-% Acrylsäure bzw. Methacrylsäure und/- oder deren entsprechenden Estern (als Donoren) in der Reaktionsmischung zu verwenden.

Das Produktionssystem läßt sich entweder durch einen Rührkesselreaktor oder einen Festbettreaktor charakterisieren. Der Rührkesselreaktor kann mit einer Vorrichtung zum Abdestillieren des aus dem Acryl- und/oder Methacrylsäuredonor freigesetzten Alkanols beziehungsweise des aus der Acrylsäure und/oder Methacrylsäure freigesetzten Wassers ausgestattet sein.

Die Reaktion wird vorzugsweise durchgeführt bis der gewünschte Umsatz erreicht wird. Eine Reaktionsführung mit gleichzeitiger Destillation wird bevorzugt, weil die Entfernung des Reaktionswassers bzw. Reaktionsalkanols zu höheren Umsätzen in kürzeren Reaktionszeiten aufgrund der Verschiebung des Reaktionsgleichgewichts führt.

Um möglichst hohe Umsetzungsgrade zu erreichen, ist die Entfernung des Reaktionswassers bzw. -alkanols zu empfehlen.

Nach beendeter Umsetzung kann der Enzymkatalysator durch geeignete Maßnahmen, wie Filtrieren oder Dekantieren, abgetrennt werden und gegebenenfalls mehrmals eingesetzt werden.

Der Festbettreaktor ist mit immobilisierten Enzymen bestückt, wobei die Reaktionsmischung durch die mit Katalysator gefüllte Säule gepumpt wird. Mit einem auf einem Träger immobilisierten Enzym ist es auch möglich, die Reaktion in einem Wirbelbett durchzuführen.

Die Reaktionsmischung kann kontinuierlich durch die Säule gepumpt werden, wobei mit der Fließgeschwindigkeit die Verweilzeit und damit der gewünschte Umsatz zu steuern ist. Es ist auch möglich, die Reaktionsmischung im Kreislauf durch die Säule zu pumpen, wobei auch unter Vakuum das Reaktionswasser bzw. -alkanol gleichzeitig abdestilliert werden kann.

Andere Methoden zur Entfernung des Reaktionswassers bzw. -alkanols können auch verwendet werden, z. B. Absorption oder Pervaporation.

Diese Silikonpolytheracrylat- oder Silikonpolythermethacrylatpolysiloxan modifizierten Semigele sind besonders für den Einsatz in UV härtenden Coatungsmittsystemen geeignet, da die Doppelbindung in den polymeren bei der Aushärtung mit vernetzen kann.

Die erfindungsgemäßen oberflächenmodifizierten Semi-Gele können nach verschiedenen Verfahren hergestellt werden, bei denen jeweils die Oberfläche des Semi-Gels mit zumindest einem Organopolysiloxan und/oder zumindest einem modifizierten Organopolysiloxan in Kontakt gebracht wird.

In einer Ausführungsform I der vorliegenden Erfindung werden das Organopolysiloxan und ein optional vorvermahlenes Semi-Gel intensiv vermischt. Die Zugabe erfolgt so, dass eine homogene Verteilung über das Semi-Gel gewährleistet ist. Anschließend wird die Mischung bevorzugt getrocknet, vermahlen und ggf. gesiebt oder gesichtet.

In einer Ausführungsform II der vorliegenden Erfindung wird getrocknetes Semi-Gel mit einer Restfeuchte von $\leq$ 10 % mit dem Organopolysiloxan intensiv vermischt. Die Zugabe des Organopolysiloxans erfolgt so, dass eine homogene Verteilung über das Semi-Gel gewährleistet ist. Anschließend wird die Mischung optional vermahlen und ggf. gesiebt oder gesichtet.

In einer Ausführungsform III der vorliegenden Erfindung wird Semi-Gel vermahlen und gleichzeitig die Oberfläche modifiziert. Dazu wird das Polymer so in den Mahlraum der Mühle gefördert, dass sich das gewünschte Belegungsverhältnis einstellen kann. Anschließend wird das Produkt optional gesiebt oder gesichtet und ggf. getrocknet.

Bei den Verfahrensvarianten I und II wird vorzugsweise ein Semi-Gel in einem Mischer, vorgelegt, das Oberflächenmodifizierungsagens zugegeben und mit dem Semi-Gel intensiv vermischt. Bezüglich des bezüglich dessen es Mischers gibt es keine besonderen Einschränkungen. Es können beispielweise Lödige-Mischer oder Taumelmischer-Mischer verwendet werden.

Die Zugabe erfolgt bevorzugt so, dass eine homogene Verteilung über das Semi-Gel gewährleistet ist. Dies ist z. B. durch Einsprühen oder Eindüsen oder Zutropfen oder andere dem Fachmann bekannte Methoden möglich.

Es möglich getrocknetes Semi-Gel als auch feuchtes Semi-Gel, d.h. einen Filterkuchen einzusetzen. Der Feuchtegehalt des Semi-Gels kann von 1 bis 15 Gew. % betragen.

In den Verfahrensvarianten I und II wird das Semi-Gel vorzugsweise einer Vorvermahlung vor der Coatung unterzogen. Wird ein getrocknetes Semi-Gel eingesetzt, so wird dies vorzugsweise per Kurzzeittrocknung getrocknet. Als besonders geeignete Trocknungsaggregate haben sich Sprühtrockner, Mahltrockner, Stromtrockner oder Spin-Flash-Trockner getrocknet erwiesen. Der Feuchtegehalt der getrockneten Semi-Gele liegt bevorzugt bei 1 bis 15 Gew. %, bevorzugt 2 bis 10 Gew. %, besonders bevorzugt 3 bis 5 Gew. %.

In Verfahrensvariante 3 erfolgt die Oberflächenmodifikation in einer Mahlapparatur, wobei vorzugsweise das Semi-Gel gleichzeitig vermahlen, oberflächenmodifiziert und ganz besonders bevorzugt gleichzeitig auch getrocknet wird. Auch in dieser Variante kann ein vorvermahlenes Semi-Gel eingesetzt werden, vorzugsweise wird jedoch nicht vorvermahlen.

Für die Vorvermahlung in den oben beschriebenen Verfahrensvarianten sind alle Arten von Mühlen geeignet, bevorzugt sind jedoch mechanische Schlägermühlen.

Für die Feinvermahlung zur Endprodukt, die für die Anwendung als Mattierungsmittel notwendige Feinteiligkeit des Produkts notwendig ist, haben sich Luft- und Dampftstrahlmühlen als besonders geeignet erwiesen. Besonders bevorzugt wird die Feinvermahlung auf einer Fließbettgegenstrahlmühle durchgeführt.

Zur Vermeidung von Oberkorn oder Stippen ist es zweckmäßig, Partikel mit einem Durchmesser über 50 $\mu$m, bevorzugt über 30$\mu$ m, insbesondere über 20 $\mu$m abzutrennen. Dies kann je nach Feinheit des Mattierungsmittels z.B. durch ein entsprechendes Sieb oder eine Sichtereinrichtung, die auch in die Mühle integriert sein kann, erfolgen.

Die Oberflächenmodifikation kann wie zuvor beschrieben vor, während oder nach einer Vermahlung oder Trocknung erfolgen. Das Oberflächenmodifizierungsagens kann dabei unverdünnt als Reinsubstanz oder in verdünnter Form als wässrige Emulsion zugegeben werden. Dabei werden bevorzugt 0.2 bis 12 Gew.-%, besonders bevorzugt 1 bis 10 Gew. %, ganz besonders bevorzugt 2 bis 8 Gew. % und speziell bevorzugt 3 bis 8 Gew. % des Organopolysiloxans bezogen auf das Semi-Gel zugegeben.

Die im erfindungsgemäßen Verfahren eingesetzten, unmodifizierten Semi-Gelvorstufen können nach bekannten Verfahren hergestellt oder kommerziell erworben werden. Besonders bevorzugt werden die Semi-Gele SD 500, SD 520, SD 530, SD 538, SD 540, SD 600, SD 640 und SD 690 der Firma Beijing Aerospace Sai De Power Material Technical Company Ltd., Yuquan Road No.16, Haidian District, Beijing (China) (China) verwendet.

Bevorzugt wird als Ausgangsmaterial ein, besonders bevorzugt nicht mit einem Organopolysiloxan oberflächenmodifiziertes, Semi-Gel mit folgenden physikalisch-chemischen Eigenschaften verwendet:

- BET-Oberfläche von 200 bis 400 $m^2/g$, bevorzugt von 210 bis 350 $m^2/g$,
- meso-Porenvolumen für Poren mit einem Durchmesser von 2 - 30 nm von 0,95 bis 1,5 ml/g, bevorzugt von 1,0 bis 1,4 ml/g,
- meso-Porenvolumen für Poren mit einem Durchmesser von 2 - 50 nm von 1,2 bis 1,8 ml/g, bevorzugt von 1,3 bis 1,7 ml/g,
- Porenmaximum im Bereich von 10 bis 50 nm von 15 bis 45 nm.

Daraus ergibt sich, dass der Oberflächenmodifizierungsschritt einerseits als zusätzlicher Schritt in bekannten Verfahren zur Herstellung von Semi-Gelen integriert werden kann, andererseits aber auch Semi-Gelvorstufen erworben werden können, welche als Ausgangsmaterial für eine der Verfahrensvarianten I - III verwendet werden können.

Als oberflächenmodifizierende Organopolysiloxane werden im erfindungsgemäßen Verfahren vorzugsweise die weiter oben bereits beschriebenen Polyorganosiloxane oder modifizierte Polyorganosiloxane eingesetzt.

Die erfindungsgemäßen oberflächenmodifizierten Semi-Gele werden bevorzugt als Mattierungsmittel in Farben und Lacken verwendet.

Weiterhin können die erfindungsgemäßen oberflächenmodifizierten Semi-Gele in allen Anwendungsgebieten verwendet werden, in denen üblicherweise Semi-Gele eingesetzt werden, wie z. B. als Bestandteil von Papierbeschichtungen, als Bestandteil von Entschäumerformulierungen, als Verstärker im Silkonkautschuk, oder in Polymerformulierungen, z.B. als Antiblockingmittel.

Die physikalisch/chemischen Daten der erfindungsgemäßen oberflächenmodifizieren Semi-Gele werden mit den folgenden Methoden bestimmt:

**Bestimmung der BET-Oberfläche**

Die BET-Oberfläche von Semi-Gelen wird in Anlehnung an DIN ISO 9277 mittels der Methode der Stickstoffadsorption nach Brunauer, Emmett und Teller (BET) bestimmt. Die Methode basiert auf den Arbeiten von S. Brunauer, P.H. Emmett und E. Teller, J. Am. Chem. Soc., 60, 309 (1938).

Die Messungen erfolgen auf dem Gerät Tristar 3000 (Fa. Micromeritics). Die zu untersuchenden Proben werden vor der Messung so lange unter Vakuum ($p < 10^{-3}$ mbar) bei 160 °C entgast, bis der Druck über der Probe bei geschlossenem Vakuum für 30 Minuten konstant bleibt.

**Bestimmung des Mesoporenvolumens**

Die Bestimmung der Mesoporenverteilung erfolgt nach der Methode nach Barret, Joyner und Halenda (BJH) und basiert auf Arbeiten von E. P. Barret, L. G. Joyner und P. H. Halenda, J. Amer. Chem. Soc., Vol 73, 373, (1951).

Die Messungen erfolgen auf dem Gerät ASAP 2400 (Fa. Micromeritics). Die zu untersuchenden Proben werden vor der Messung so lange unter Vakuum ($p < 10^{-3}$ mbar) bei 200 °C entgast, bis der Druck über der Probe bei geschlossenem Vakuum für 30 Minuten konstant bleibt.

**Bestimmung des Trocknungsverlustes**

Die Feuchte oder auch Trocknungsverlust (TV) von Semi-Gelen wird in Anlehnung an ISO 787-2 nach 2-stündiger Trocknung bei 105 °C bestimmt. Dieser Trocknungsverlust besteht überwiegend aus Wasserfeuchtigkeit.

In ein trockenes Becherglas werden auf einer Präzisionswaage (Satorius LC621S) 10 g des pulverförmigen Semi-Gels auf 0.1 mg genau eingewogen (Einwaage E). Das Becherglas wird mit Aluminiumfolie abgedeckt, in die mehrere Löcher (Ø 1 mm) gebohrt sind. Das so abgedeckte Becherglas wird 2 h bei 105 °C in einem Trockenschrank getrocknet. Anschließend kühlt das heiße Becherglas in einem Exsikkator über Trockenmittel für mindestens eine Stunde auf Raumtemperatur ab.

Das Becherglas wird zur Bestimmung der Auswaage A auf der Präzisionswaage auf 0.1 mg genau ausgewogen. Man bestimmt die Feuchte (TV) in % gemäß

$$TV = (1 - A / E) * 100,$$

wobei A = Auswaage in g und E = Einwaage in g bedeuten.

**Bestimmung des Glühverlustes**

Nach dieser Methode wird der Gewichtsverlust von Semi-Gelen in Anlehnung an DIN EN ISO 3262-1 bei 1000 °C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung des Trocknungsverlusts" in Anlehnung an DIN EN ISO 787-2 ermittelt.
0.5 g Semi-Gel werden auf 0.1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Kieselgel als Trocknungsmittel auf Raumtemperatur abgekühlt. Die Auswaage A wird gravimetrisch bestimmt.
Man erhält den Glühverlust GV in % gemäß

$$GV = (1 - A / F) * 100.$$

wobei F die korrigierte Einwaage bezogen auf getrocknete Substanz in g ist und sich nach

$$F = E * (1 - TV / 100).$$

errechnet.
In den Berechnungen bedeuten A = Auswaage in g, E = Einwaage in g und TV = Trocknungsverlust in %.

**Bestimmung der DBP-Zahl**

Die DBP-Aufnahme (DBP-Zahl), die ein Maß für die Saugfähigkeit des Semi-Gels ist, wird in Anlehnung an die Norm DIN 53601 wie folgt bestimmt:

12.50 g pulverförmiges Semi-Gel (Feuchtegehalt 4 ± 2 %) werden in die Kneterkammer (Artikel Nummer 279061) des Brabender-Absorptometer "E" gegeben (ohne Dämpfung des Ausgangsfilters des Drehmomentaufnehmers). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in g/100g angegeben und anhand der folgenden Formel berechnet:

$$DBP = \frac{V * D * 100}{E} * \frac{g}{100g} + K$$

mit DBP = DBP-Aufnahme in g/100g
V = Verbrauch an DBP in ml
D = Dichte von DBP in g/ml (1 ,047 g/ml bei 20 °C)
E = Einwaage an Semi-Gel in g
K = Korrekturwert gemäß Tabelle 1 (Feuchtekorrekturtabelle) in g/100g

Die DBP-Aufnahme ist für wasserfreies, getrocknetes Semi-Gel definiert. Bei Verwendung von feuchten Semi-Gelen ist der Korrekturwert K für die Berechnung der DBP-Aufnahme zu berücksichtigen. Dieser Wert kann anhand der Tabelle 1 ermittelt werden, z. B. würde ein Wassergehalt des Semi-Gels von 5.8 % einen Zuschlag von 33 g/100 g für die DBP-Aufnahme bedeuten. Die Feuchte des Semi-Gels wird gemäß der beschriebenen Methode "Bestimmung des Trocknungsverlusts" ermittelt.

Tabelle 1: Feuchtekorrekturtabelle für Dibutylphthalataufnahme -wasserfrei-

| % Wasser | .% Wasser<br>.0 | .2 | .4 | .6 | .8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Partikelgröße**

Die Anwendung der Laserbeugung zur Bestimmung von Partikelgrößenverteilungen pulverförmiger Feststoffe basiert auf dem Phänomen, dass Partikel in Abhängigkeit von ihrer Größe das Licht eines monochromen Laserstrahls mit differierenden Intensitätsmustern in alle Richtungen streuen bzw. beugen. Je kleiner der Durchmesser des angestrahlten Partikels ist, desto größer sind die Streuungs- bzw. Beugungswinkel des monochromen Laserstrahls.

Die Probenvorbereitung und Messung erfolgt im Falle hydrophiler Siliciumdioxide mit VE-Wasser als Dispergierflüssigkeit, im Falle nicht ausreichend mit Wasser benetzbarer Siliciumdioxide mit reinem Ethanol. Vor Beginn der Messung lässt man das Laserbeugungsmeßgerät LS 230 (Fa. Beckman Coulter; Meßbereich: 0,04 - 2000μm) und das Flüssigkeitsmodul (Small Volume Module Plus, 120 ml, Fa. Beckman Coulter) 2 h warmlaufen und spült das Modul dreimal mit VE-Wasser. Zur Messung hydrophober Fällungskieselsäuren wird der Spülvorgang mit reinem Ethanol durchgeführt.

In der Gerätesoftware des Laserbeugungsmeßgerätes LS 230 werden die folgenden für eine Auswertung nach der Mie-Theorie relevanten optischen Parameter in einer .rfd-Datei festgelegt: Brechungsindex der Dispergierflüssigkeit B. I. $Real_{Wasser}$ = 1,332 (1,359 für Ethanol) Brechungsindex des Feststoffes Probenmaterial) $Real_{SiO2}$ = 1,46

Imaginär = 0,1
Formfaktor = 1

Weiterhin sind folgende für die Partikelmessung relevanten Parameter einzustellen:

Messzeit = 60 s
Anzahl der Messungen = 1
Pumpengeschwindigkeit = 75 %

Die Probenzugabe kann in Abhängigkeit von der Probenbeschaffenheit direkt als pulverförmiger Feststoff mithilfe eines Spatels oder in suspendierter Form mithilfe einer 2 ml Einwegpipette in das Flüssigkeitsmodul (Small Volume Module Plus) des Gerätes erfolgen. Ist die zur Messung erforderliche Probenkonzentration erreicht (optimale optische Abschattung), meldet die Gerätesoftware des Laserbeugungsmeßgerätes LS 230 ein "OK".

Vermahlene Siliciumdioxide werden durch 60 s Ultrabeschallung mittels Ultraschallprozessor Vibra Cell VCX 130 der Firma Sonics mit Ultraschallkonverter CV 181 und 6 mm Ultraschallspitze bei 70 % Amplitude und gleichzeitigem Umpumpen im Flüssigkeitsmodul dispergiert. Im Falle von unvermahlenen Siliciumdioxide erfolgt die Dispergierung ohne Ultrabeschallung durch 60 s Umpumpen im Flüssigkeitsmodul.

Die Messung erfolgt bei Raumtemperatur. Aus den Rohdaten berechnet die Gerätesoftware auf Basis der Mie-Theorie mithilfe der zuvor festgelegten optischen Parameter (.rfd-Datei) die Volumenverteilung der Partikelgrößen und den $d_{50}$-Wert (Medianwert).

Die ISO 13320 "Particle Size Analysis - Guide to Laser Diffraction Methods" beschreibt die Methode der Laserbeugung zur Bestimmung von Partikelgrößenverteilungen detailliert.

## Bestimmung des Kohlenstoffgehalts

Die Bestimmung des Kohlenstoffgehaltes an Semi-Gelen erfolgt mit dem "C-mat 500" (Fa. Ströhlein Instruments). Die Proben werden bei ca. 1350 °C getempert und der Kohlenstoff durch einen Sauerstoffstrom zu $CO_2$ oxidiert. Das $CO_2$ wird in einer Infrarotzelle gemessen.

Bei den Messungen wird unterschieden, ob der Kohlenstoffgehalt größer oder kleiner als 1 Prozent beträgt. Liegt der Kohlenstoffgehalt der homogenen Proben oberhalb 1 Prozent, wird im "High"-Bereich des Gerätes gemessen, liegt er unterhalb von 1 Prozent, wird im "Low"-Bereich gemessen.

Zuerst wird die Kontrollprobe gemessen. Dazu werden auf ein ausgeglühtes, auf Raumtemperatur abgekühltes Porzellanschiffchen 0.14-0.18 g der Kontrollprobe auf einer Analysenwaage eingewogen. Beim Bedienen der Starttaste wird das Gewicht übernommen, da die Waage mit dem "C-mat" gekoppelt ist. Das Schiffchen muss innerhalb 30 Sekunden in die Mitte des Verbrennungsrohres geschoben werden. Nach Abschluss der Verbrennung wird der Messwert in Impulse umgewandelt und vom Rechner ausgewertet. Es werden mindestens 3 Bestimmungen (je nach Übereinstimmung) durchgeführt. Eventuell muss der Faktor des Gerätes neu eingestellt werden (Details siehe Bedienungsanleitung "C-mat 500", Firma Ströhlein Instruments). Dieser Faktor wird nach folgender Formel berechnet:

$$Faktor = \frac{Sollwert(Standard) \ * \ Einwaage(Standard) \ in \ g \ * \ 10^8}{Impulse}$$

Anschließend werden die Semi-Gelproben gemessen. Die Einwaage beträgt 0.04 - 0.05 g. Das Porzellanschiffchen wird mit einem Porzellandeckel abgedeckt. Bei Abweichungen > 0.005 % werden mehr Messungen durchgeführt und der Durchschnitt errechnet.

Die Handhabung des "C-mat 500" wird der Bedienungsanleitung der Firma Ströhlein Instruments entnommen.

Der Kohlenstoffgehalt wird wie folgt berechnet und in der Einheit % angegeben:

$$\text{Kohlenstoffgehalt} = (l * F * 10^{-8}) / E$$

I = Impuls
F = Faktor
E = Einwaage in g

## Bestimmung der Schichtdicke

Der Reflektometerwert von mattierten Lacken wird u.a. von der Schichtdicke der Beschichtung beeinflusst. Die exakte Kontrolle der Dicke der getrockneten Lackschicht ist somit erforderlich.

Die nachfolgende Arbeitsvorschrift gilt nur zur Messung von einschichtigen Lackfilmen auf Glassubstraten. Vor der Durchführung der Messung ist die Sonde des Ultraschall-Schichtdickenmessgerätes (QuintSonic, Fa. Elektro Physik) gemäß der Betriebsanleitung des Gerätes zu kalibrieren. Nach Auftragen von ausreichend Koppelmittel auf die Sondenmessfläche wird die Sonde senkrecht auf die Oberfläche der Beschichtung aufgesetzt und die Messung durch Drücken des Sondentaster starten. Nach kurzer Zeit wird der Messwert angezeigt. Die Sonde wird von der Messfläche abgehoben.

Es werden mind. 5 Messungen an Messstellen, die gleichmäßig auf dem zu messenden Objekt verteilt sind, durchgeführt. Es ist darauf zu achten, dass die Messstellen keine Schädigungen, wie Krater, Einschlüsse, Kratzer, Luftblasen etc., oder Verschmutzungen aufweisen.

Aus den ermittelten Messdaten ist ein Mittelwert zu bilden und auf 1 $\mu$m genau zu runden.

## Bestimmung des 60°- und 85°-Reflektometerwerts

Die Beeinflussung des Reflektionsvermögens durch gezielte Aufrauhung von Lackfilmoberflächen ist die herausragende Eigenschaft von Mattierungsmitteln auf Basis von $SiO_2$. Der Reflektometerwert ist somit ein wichtiges Kriterium zur Charakterisierung von mattierten Lackfilmen.

Voraussetzung für die Messung ist, dass die zu messenden Lackfilmoberflächen plan, sauber und ausgehärtet sind.

Die Messung ist an mindestens 3 repräsentativen Stellen der Probe mittels eines Reflektometers mit Messgeometrie nach DIN 67530 (z.B. Haze-gloss, BYK-Instruments) durchzuführen. Werden zu große Abweichungen der Einzelmessungen erzielt, sollte in der Regel eine erneute Messung an repräsentativen Stellen erfolgen oder die Anzahl der Einzelmessungen auf > 3 erhöht werden. Am BYK haze-gloss wird im Display die Standardabweichung der Messungen angezeigt. Ist die Standard-abweichung s > 0.5, ist die Durchführung der o.g. Maßnahmen zu empfehlen. Der Mittelwert ist auf 1 Dezimalstelle anzugeben.

Bei der Charakterisierung von mattierten Lackfilmoberflächen hat es sich bewährt, mit der 60°- und der 85°-Messgeometrie zu messen. In der Abweichung von DIN 67530 werden deshalb die Reflektometerwerte mattierter Lackfilmoberflächen mit beiden Messgeometrien bestimmt.

**Beispiele**

Die folgenden Beispiele sollen die Erfindung näher erläutern, ohne ihren Umfang zu beschränken.

**Beispiel 1**

Das Semi-Gel SD 500 der Firma Beijing Aerospace Sai De Power Material Technical Company Ltd., Yuquan Road No.16, Haidian District, Beijing (China) mit folgenden physikalisch-chemischen Daten gemäß Tabelle 2 wird mittels einer AFG 50 Strahlmühle der Firma Alpine wie folgt vermahlen und gleichzeitig mit einer Suspension bestehend aus 50 Gew.-% des Organopolysiloxans TegoRad 2300 und 50 Gew.-% Ethanol beschichtet:

Sichterdrehzal: 15000 U/min
Sichtluft: 30 $Nm^3/h$
Mahldruck: 4 bar
PID Gebläse: 51%
Gesamtluft: 82 $Nm^3/h$
Durchsatz: 0,57 $kg_{SiO2}/h$
Mahldauer: 80 min

Das Produkt wird anschließend für 2,5h bei 80°C im Trockenschrank getrocknet.

Die Zugabe der TegoRad 2300 Suspension erfolgt derart, dass am Ende ein oberflächenmodifiziertes Semi-Gel mit den in Tabelle 2 angegebenen physikalisch-chemischen Eigenschaften erhalten wird.

**Beispiel 2**

Das Semi-Gel SD 600 der Firma Beijing Aerospace Sai De Power Material Technical Company Ltd., Yuquan Road No.16, Haidian District, Beijing (China) mit den in Tabelle 2 angegebenen physikalisch-chemischen Daten wird mittels einer AFG 50 Strahlmühle der Firma Alpine wie folgt vermahlen und gleichzeitig mit einer Suspension bestehend aus 50 Gew.-% des Organopolysiloxans TegoRad 2300 und 50 Gew.-% Ethanol beschichtet:

Sichterdrehzal: 15000 U/min
Sichtluft: 30 $Nm^3/h$
Mahldruck: 4 bar
PID Gebläse: 51%
Gesamtluft: 79 $Nm^3/h$
Durchsatz: 0,75 $kg_{SiO2}/h$
Mahldauer: 80 min

Das Produkt wird anschließend für 2,5h bei 80°C im Trockenschrank getrocknet.

Die Zugabe der TegoRad 2300 Suspension erfolgt derart, dass am Ende ein oberflächenmodifiziertes Semi-Gel mit den in Tabelle 2 angegebenen physikalisch-chemischen Eigenschaften erhalten wird.

**Tabelle** 2: Physikalisch-Chemische Eigenschaften der Edukte und Produkte der Beispiele 1 und 2

| Parameter | Einheit | Beispiel 1 Ausgangsmaterial | Beispiel 1 nach Coatung | Beispiel 2 Ausgangsmaterial | Beispiel 2 nach Coatung |
|---|---|---|---|---|---|
| BET-Oberfläche (Multipoint) | $m^2/g$ | 264 | 243 | 286 | 206 |
| DBP (wasserfrei) | g/(100g) | NB | 242 | NB | 255 |
| C-Gehalt | Gew.-% | NB | 2 | NB | 1,8 |
| Feuchte | Gew.-% | NB | 2,1 | NB | 2,5 |
| Gesamtporenvolumen | $m^3/g$ | 1, 642 | 1,585 | 1,708 | 1,409 |
| Mesoporenvolumen für Durchmesser 2 - 50 nm | $m^3/g$ | 1,477 | 1,447 | 1,401 | 1,105 |
| Mesoporenvolumen für Durchmesser 2 - 30 nm | $m^3/g$ | 1,236 | 1,203 | 1,116 | 0,713 |
| Maximum der Volumenporengrößenverteilungsfunktion | nm | 24,8 | 26,1 | 23,9 | 27,4 |
| Partikeldurchmesser d10 | µm | 13,73 | 4,35 | 17,58 | 3,43 |
| Partikeldurchmesser d50 | µm | 83,79 | 7,21 | 113,6 | 5,87 |
| Partikeldurchmesser d90 | µm | 193,6 | 10,58 | 234,8 | 9,58 |
| Span | | 2,15 | 0,86 | 1, 91 | 1,047 |
| NB = Nicht bestimmt | | | | | |

**Vergleichsbeispiel 1**

Las Vergleichsbeispiel 1 wurde die Fällungskieselsäure ACEMATT® HK 400 der Firma Evonik Degussa GmbH mit 8 Massenprozent TegoRad® 2300 belegt.

**Beispiel 4:**

**Test der lacktechnische Eigenschaften der erfindungsgemäßen Semi-Gele in einem Schwarzlack**

Als Schwarzlack wurde Duplex D 1326 der Firma DuPont, Hersteller Herberts Austria GmbH) verwendet. Es wurden jeweils 5,5 g des Mattierungsmittels eingearbeitet. 1

Es werden die 60°- und 85°-Reflektometerwert in Anlehnung an die DIN 67530, ISO 2813 oder TM 523-78 bestimmt und der Sheen (= 85°-Reflektometerwert - 60°-Reflektometerwert) errechnet (siehe Tabelle 3). Der Sheen erlaubt eine Aussage über die Mattierungswirkung einer Oberfläche bei verschiedenen Beobachtungswinkeln. Ein niedrigerer Sheen bedeutet, daß unter allen Betrachtungswinkeln einer Oberfläche diese matt erscheint.

**Tabelle 3: Schwarzlack**

| $SiO_2$ aus Beispiel | Einwaage | Schichtdicke | 60°-Reflekto-meterwert | 85°-Reflekto-meterwert | Sheen |
|---|---|---|---|---|---|
| | [g] | [μm] | [%] | [%] | [%] |
| 1 | 5,5 | 26 - 30 | 21,6 | 64,1 | 29,3 |
| 2 | 5,5 | 26 - 30 | 23,4 | 74,4 | 29,7 |
| V 2 | 5.5 | 26 - 30 | 21,1 | 80,5 | 59,4 |

Die Daten in Tabelle 3 zeigen, dass die Mattierungseffizienz der erfindungsgemäßen oberflächenmodifizierten Semi-Gele im Vergleich zu einer mit dem gleichen Oberflächenmodifizierungsagens behandelten und als Mattierungsmittel vertriebenen Fällungskieselsäure insbesondere im Hinblick auf den Glanzwert bei 85° deutlich verbessert ist. Die mit den erfindungsgemäßen Mattierungsmitteln mattierten Lacke erscheinen von allen Betrachtungswinkeln gleichmäßig matt, was durch den Sheen bestätigt wird, welcher um annähernd 50 % verbessert ist.

**Patentansprüche**

1. Oberflächenmodifiziertes Semi-Gel, wobei das Semi-Gel ein amorphes Siliciumdioxid ist,
**dadurch gekennzeichnet,**
**dass** zumindest Teile die Oberfläche des Semi-Gels mit zumindest einem Organopolysiloxan und/oder zumindest einem modifizierten Organopolysiloxan modifiziert sind,

   - eine BET-Oberfläche von 200 bis 400 $m^2/g$,
   - ein meso-Porenvolumen für Poren mit einem Durchmesser von 2 - 30 nm von 0,7 bis 1,5 ml/g,
   - ein ineso-Porenvoltimen für Poren mit einem Durchmesser von 2 - 50 nm von 0,9 bis 1,8 ml/g,
   - ein Porenmaximum im Bereich von 10 bis 50 nm,

   aufweist.

2. Oberflächenmodifiziertes Semi-Gel nach Anspruch 1,
**dadurch gekennzeichnet,**
**dass** es

   - eine BET-Oberfläche von 200 bis 350 $m^2/g$, bevorzugt von 200 bis 300 $m^2/g$,
   - ein meso-Porenvolumen für Poren mit einem Durchmesser von 2 - 30 nm von 0,95 bis 1,4 ml/g, bevorzugt von 1,0 bis 1,3 ml/g,
   - ein meso-Porenvolumen für Poren mit einem Durchmesser von 2 - 50 nm von 1,0 bis 1,7 ml/g, bevorzugt 1,1 bis 1,6 ml/g,
   - ein Porenmaximum im Bereich von 15 bis 45 nm, bevorzugt von 15 bis 40 nm und ganz besonders bevorzugt von 20 bis 35 nm

aufweist.

3. Oberflächenmodifiziertes Semi-Gel nach einem der Ansprüche 1 oder 2, **dadurch gekennzeichnet,** **dass** die Oberfläche des Semi-Gels mit einem Polyorganosiloxan mit folgender allgemeiner Struktur:

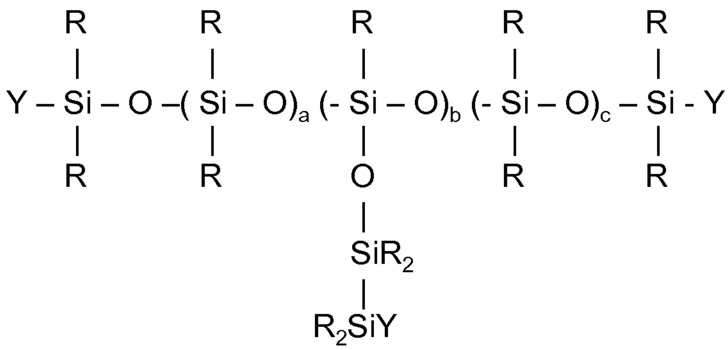

wobei

Y = -OH, -OR oder
Y = $H_5C_2$-O-$(C_2H_4O)_m$-, $H_7C_3$-O-$(C_3H_6O)_m$- oder

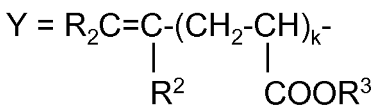

R = -Alkyl insbesondere Methyl oder Ethyl,
$R^2$ = Alkyl oder H,
$R^3$ = Alkyl,
$R^4$ = H oder Alkyl,
a = 0 - 100, b = 0-100, c= 0-100, d = 0-100,
Summe a + b + c + d gleich oder ungleich 0
m = 0-100 und k = 0-100 ist,
belegt ist.

4. Oberflächenmodifiziertes Semi-Gel nach Anspruch 1 oder 2, **dadurch gekennzeichnet,** **dass** die Oberfläche eines Semi-Gels mit einem Polyorganosiloxan mit folgender allgemeiner Struktur:

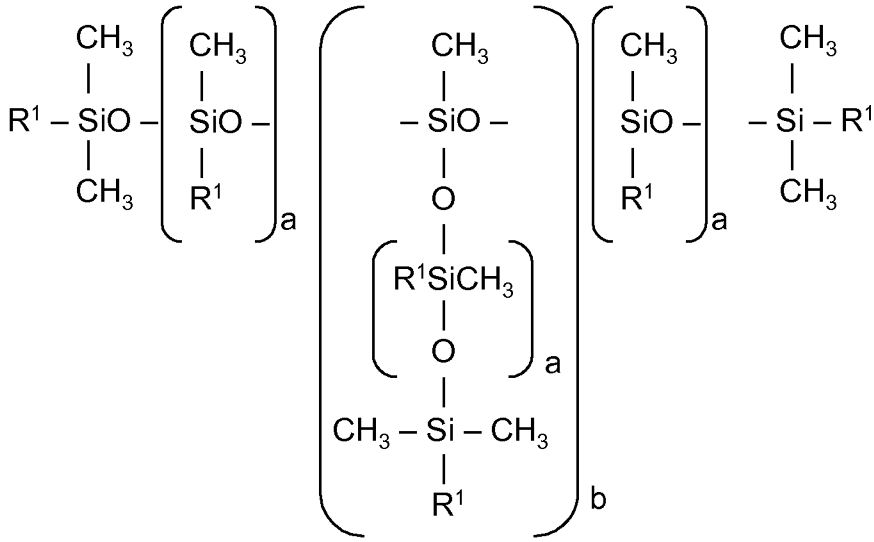

wobei
$R_1$ = ein Methylrest oder

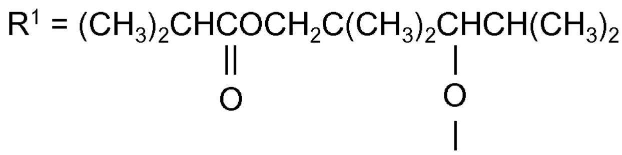

und/oder

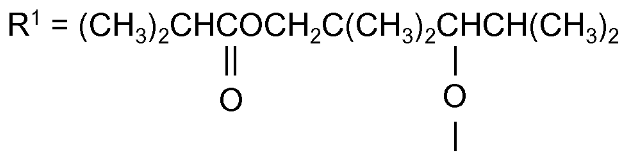

ist und die Summe der Einheiten a = 0 bis 100, die Summe der Einheiten b = 0 bis 15 ist, wobei bei den Resten $R^1$ das Verhältnis von Methyl- zu Alkoxyresten kleiner 50 :1 ist und b > 1 ist, wenn a = 0 ist und a > 5 ist, wenn b = 0 ist, belegt ist.

**5.** Oberflächenmodifiziertes Semi-Gel nach Anspruch 1 oder 2,
**dadurch gekennzeichnet,**
**dass** die Oberfläche eines Semi-Gels mit einem Silikonpolytheracrylat-Polymer oder Silikonpolythermethacrylat-Polymere, bevorzugt einem Acrylsäureester und/oder Methacrylsäureester von hydroxyfunktionellen Siloxanen und/oder polyalkylenmodifizierten Siloxanen, besonders bevorzugt Organopolysiloxane, welche durch Ver- oder Umesterung von Acrylsäure und/oder Methacrylsäure oder Acrylsäureestern und/oder Methacrylsäureestern in Anwesenheit eines die Ver- oder Umesterung katalysierenden Enzyms mit hydroxyfunktionellen und/oder polyoxyalkylenmodifizierten Siloxanderivaten der allgemeinen Formel (I)

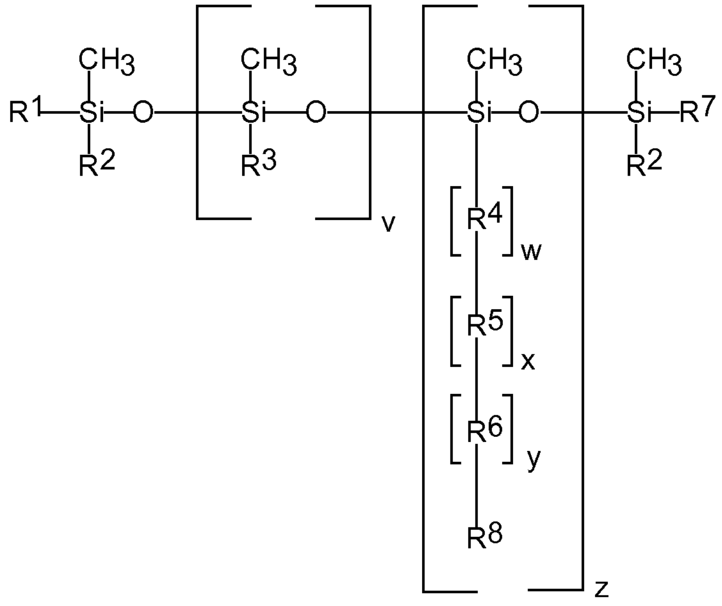

(I)

wobei

$R^1$ und/oder $R^7$ = $R^2$ oder $[R^4]_w$-$[R^5]_x$-$[R^6]_y$-$R^8$,
$R^2$ = $R^3$ oder ≠ $R^3$ für gleiche oder verschiedene Alkylreste oder Alkylenreste mit 1 bis 24 Kohlenstoffatomen oder gegebenenfalls substituierte Phenylreste mit bis zu 24 Kohlenstoffatomen steht,
$R^4$ = ein zweiwertiger Rest der Formel O, NH, $NR^2$, S oder ein Rest der Formel $(OSi(CH_3)_2)_u$, wobei
u = 1 bis 200,
$R^5$ = gleiche oder verschiedene Alkylreste oder Alkylenreste mit 1 bis 24 Kohlenstoffatomen, oder

$$C_nH_{2n-f}R^2_f\text{-}R^4\text{-}C_mH_{2m-g}R^2_g,$$

wobei
f = 0 bis 12,
g = 0 bis 12,
n = 1 bis 18,
m = 1 bis 18,
$R^6$ = $O\text{-}(C_2H_{4-a}R^2_aO)_b(C_cH_{2c}O)_d$, wobei
a = 0 bis 3,
b = 0 bis 100,
c = 2 bis 12,
d = 0 bis 100,
die Summe (b + d) = 1 bis 200 ist
und die Reihenfolge der einzelnen Polyoxyalkylensegmente $(C_2H_{4-a}R^2_aO)_b$ und $(C_cH_{2c}O)_d$ beliebig sein kann und insbesondere Blockcopolymere, wie statistische Polymere sowie deren Kombinationen, umfaßt, oder
$R^6$ = $O_e\text{-}C_hH_{2h}\text{-}C_iH_{2i-j}R^9_j$, wobei
e = 0 oder 1,
h = 0 bis 24,
i = 0 bis 24,
j = 1 bis 3,
die Summe (w + e) = 0 bis 1 ist
und $R^9$ jeweils ein zweiwertiger Rest der Formel O, eine Hydroxygruppe, ein Rest der Formel $C_hH_{2h}$ oder ein Rest der Formel $C_kH_{2k-l}(OH)_l$ bedeutet, wobei
k = 0 bis 24 und
l = 1 bis 3 ist,
$R^8$ = ein Wasserstoffrest oder ein einwertiger organischer Rest ist, wenn y gleich 1 ist, wobei pro Molekül

mindestens ein Wasserstoffrest vorhanden sein muß, oder eine OH-Gruppe oder ein einwertiger organischer Rest, wenn y = 0, wobei pro Molekül mindestens eine OH-Gruppe vorhanden ist,
v = 0 bis 200,
w = 0 oder 1,
x = 0 oder 1,
y = 0 oder 1,
z = 0 bis 200
und die Summe (w + x + y) = 1 bis 3
und wenn z = 0 ist, $R^1$ und/oder $R^7$ gleich

$$[R^4]_w\text{-}[R^5]_x\text{-}[R^6]_y\text{-}R^8\text{-}, \text{ ist}$$

und wenn x = 0 dann auch w = 0 ist,
erhalten werden, beschichtet wurde.

**6.** Verfahren zur Herstellung eines oberflächenmodifizierten Semi-Gels nach einem der Ansprüche 1 bis 4,
**dadurch gekennzeichnet,**
**dass** die Oberfläche eines Semi-Gels mit zumindest einem Organopolysiloxan und/oder zumindest einem modifizierten Organopolysiloxan, bevorzugt einem Organopolysiloxan und/oder zumindest einem modifizierten Organopolysiloxan nach einem der Ansprüche 2 bis 5 in Kontakt gebracht wird.

**7.** Verfahren nach Anspruch 6,
**dadurch gekennzeichnet,**
**dass** die Oberflächenmodifizierung vor und/oder nach und/oder gleichzeitig mit einer Vermahlung erfolgt, wobei vorzugsweise eine Luftstrahl- oder Dampfstrahlmühle oder Fließbettgegenstrahlmühle verwendet wird.

**8.** Verfahren nach einem der Ansprüche 5 oder 6,
**dadurch gekennzeichnet,**
**dass** das Organopolysiloxan unverdünnt als Reinsubstanz oder in verdünnter Form als wässrige Emulsion zugegeben wird.

**9.** Verfahren nach einem der Ansprüche 6 bis 8,
**dadurch gekennzeichnet,**
**dass** als Ausgangsmaterial ein Semi-Gel mit folgenden physikalisch-chemischen Eigenschaften verwendet wird:

- BET-Oberfläche von 200 bis 400 $m^2/g$, bevorzugt von 210 bis 350 $m^2/g$,
- meso-Porenvolumen für Poren mit einem Durchmesser von 2 - 30 nm von 0,95 bis 1,5 ml/g, bevorzugt von 1,0 bis 1,4 ml/g,
- meso-Porenvolumen für Poren mit einem Durchmesser von 2 - 50 nm von 1,2 bis 1,8 ml/g, bevorzugt von 1,3 bis 1,7 ml/g,
- Porenmaximum im Bereich von 10 bis 50 nm von 15 bis 45 nm.

**10.** Verfahren nach einem der Ansprüche 6 bis 9,
**dadurch gekennzeichnet,**
**dass** das Semi-Gel mit 0.2 bis 12 Gew.-%, besonders bevorzugt 1 bis 10 Gew. %, ganz besonders bevorzugt 2 bis 8 Gew. % und speziell bevorzugt 3 bis 8 Gew. % des Organopolysiloxans oder des modifizierten Organopolysiloxans bezogen auf das Semi-Gel vermischt wird.

**11.** Verfahren nach einem der Ansprüche 6 bis 10,
**dadurch gekennzeichnet,**
**dass** das oberflächenmodifizierte Semi-Gel getrocknet wird, vorzugsweise mittels Sprühtrockner oder Mahltrockner oder Stromtrockner oder Spinflashtrockner.

**12.** Verwendung eines oberflächenmodifizierten Semi-Gels gemäß einem der Ansprüche 1 bis 5 oder hergestellt nach einem der Ansprüche 6 bis 11 als Mattierungsmittel in Farben und Lacken, als Bestandteil von Papierbeschichtungen, als Entschäumerformulierung, als Verstärker im Silikonkautschuk und/oder in Kunststoff-Anwendungen als Antiblockingmittel.

**13.** Lackformulierung, enthaltend oberflächenmodifizierte Semi-Gel gemäß mindestens einem der Ansprüche 1 bis 5 oder hergestellt nach einem der Ansprüche 6 bis 11.

## Claims

**1.** Surface-modified semi-gel, wherein the semi-gel is an amorphous silicon dioxide,
**characterized**
**in that** at least parts of the surface of the semi-gel have been modified with at least one organopolysiloxane and/or at least one modified organopolysiloxane, and in that it has

- a BET surface area of 200 to 400 $m^2/g$,
- a mesopore volume for pores having a diameter of 2 - 30 nm of 0.7 to 1.5 ml/g,
- a mesopore volume for pores having a diameter of 2 - 50 nm of 0.9 to 1.8 ml/g, and
- a pore maximum in the range from 10 to 50 nm.

**2.** Surface-modified semi-gel according to Claim 1,
**characterized**
**in that** it has

- a BET surface area of 200 to 350 $m^2/g$, preferably of 200 to 300 $m^2/g$,
- a mesopore volume for pores having a diameter of 2 - 30 nm of 0.95 to 1.4 ml/g, preferably of 1.0 to 1.3 ml/g,
- a mesopore volume for pores having a diameter of 2 - 50 nm of 1.0 to 1.7 ml/g, preferably 1.1 to 1.6 ml/g, and
- a pore maximum in the range from 15 to 45 nm, preferably from 15 to 40 nm, and very preferably from 20 to 35 nm.

**3.** Surface-modified semi-gel according to either of Claims 1 and 2,
**characterized**
**in that** the surface of the semi-gel has been coated with a polyorganosiloxane having the following general structure:

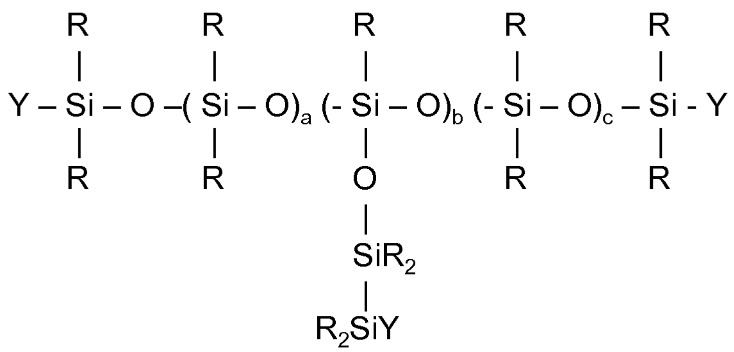

where

Y = -OH, -OR or
Y = $H_5C_2$-O-$(C_2H_4O)_m$-, $H_7C_3$-O-$(C_3H_6O)_m$- or

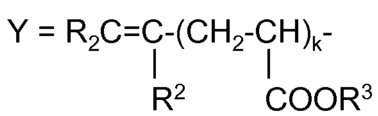

R = -alkyl, especially methyl or ethyl,
$R^2$ = alkyl or H,
$R^3$ = alkyl,
$R^4$ = H or alkyl,
a = 0-100, b = 0-100, c= 0-100, d = 0-100, sum a + b + c + d is or is not equal to 0,

m = 0-100 and k = 0-100.

4. Surface-modified semi-gel according to Claim 1 or 2, **characterized** **in that** the surface of a semi-gel has been coated with a polyorganosiloxane having the following general structure:

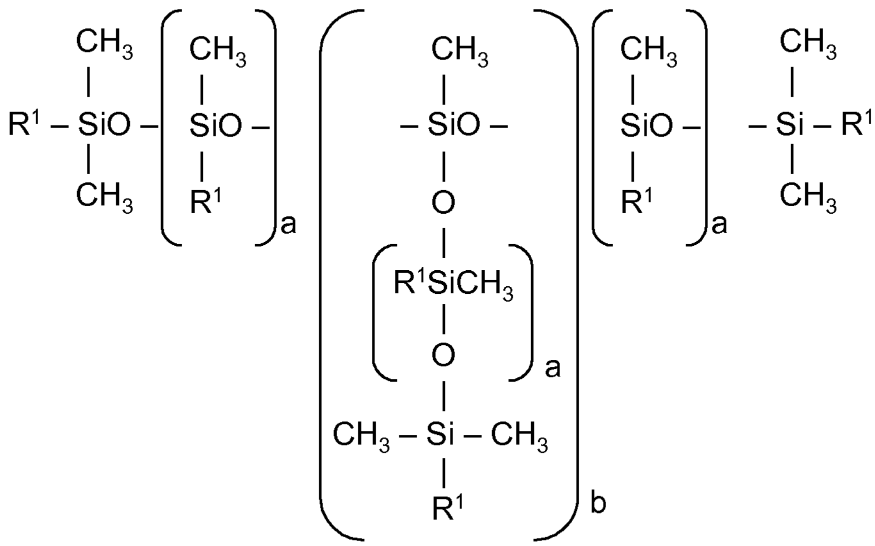

where
$R^1$ = a methyl radical or

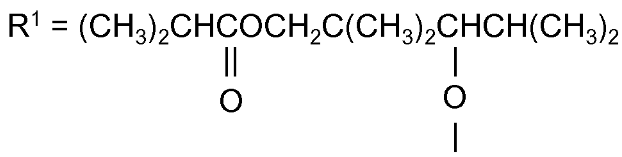

and/or

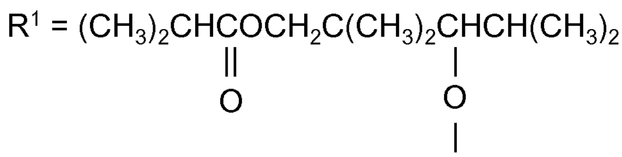

and the sum of the units a = 0 to 100, the sum of the units b = 0 to 15, the ratio of methyl to alkoxy radicals $R^1$ being less than 50:1, and b > 1 if a = 0 and a > 5 if b = 0.

5. Surface-modified semi-gel according to Claim 1 or 2, **characterized** **in that** the surface of a semi-gel has been coated with a silicone polyether acrylate polymer or silicone polyether methacrylate polymer, preferably an acrylic ester and/or methacrylic ester of hydroxy-functional siloxanes and/or polyoxyalkylene-modified siloxanes, more preferably organopolysiloxanes which are obtained by esterification or transesterification of acrylic acid and/or methacrylic acid or acrylic esters and/or methacrylic esters, in the presence of an enzyme which catalyses the esterification or transesterification, with hydroxy-functional and/or polyoxyalkylene-modified siloxane derivatives of the general formula (I)

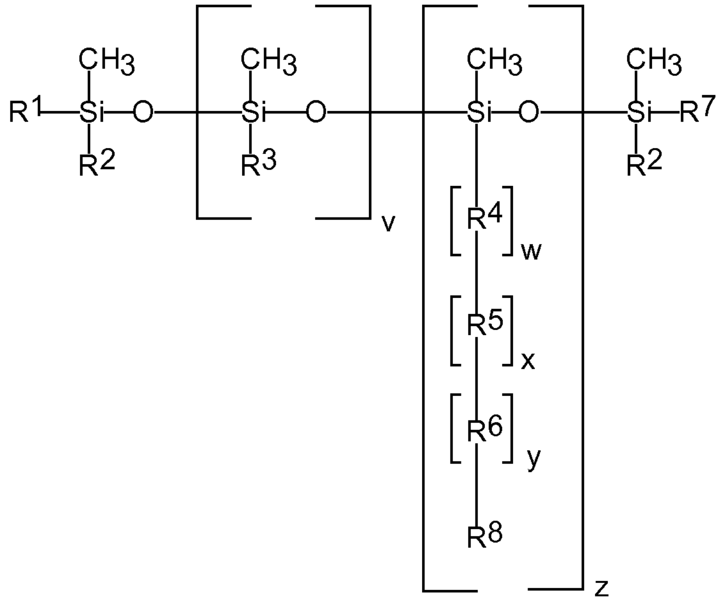

(I)

where

$R^1$ and/or $R^7$ = $R^2$ or $[R^4]_w$-$[R^5]_x$-$[R^6]_y$-$R^8$,
$R^2$ = $R^3$ or ≠ $R^3$ stands for identical or different alkyl radicals or alkylene radicals having 1 to 24 carbon atoms or optionally substituted phenyl radicals having up to 24 carbon atoms,
$R^4$ = a divalent radical of the formula O, NH, $NR^2$, S or a radical of the formula $(OSi(CH_3)_2)_u$, where u = 1 to 200,
$R^5$ = identical or different alkyl radicals or alkylene radicals having 1 to 24 carbon atoms, or

$$C_nH_{2n-f}R^2{}_f\text{-}R^4\text{-}C_mH_{2m-g}R^2{}_g,$$

where
f = 0 to 12,
g = 0 to 12,
n = 1 to 18,
m = 1 to 18,
$R^6$ = O-$(C_2H_{4-a}R^2{}_aO)_b(C_cH_{2c}O)_d$, where
a = 0 to 3,
b = 0 to 100,
c = 2 to 12,
d = 0 to 100,
the sum of (b + d) = 1 to 200
and the sequence of the individual polyoxyalkylene segments $(C_2H_{4-a}R^2{}_aO)_b$ and $(C_cH_{2c}O)_d$ may be arbitrary and encompasses especially block copolymers, such as random polymers and also combinations thereof, or
$R^6$ = $O_e$-$C_hH_{2h}$-$C_iH_{2i-j}R^9{}_j$, where
e = 0 or 1,
h = 0 to 24,
i = 0 to 24,
j = 1 to 3,
the sum of (w + e) = 0 to 1
and $R^9$ in each case is a divalent radical of the formula O, a hydroxyl group, a radical of the formula $C_hH_{2h}$ or a radical of the formula $C_kH_{2k-l}$ $(OH)_l$, where
k = 0 to 24 and
1 = 1 to 3,
$R^8$ = a hydrogen radical or a monovalent organic radical, when y is 1, it being necessary for there to be at least one hydrogen radical present per molecule, or an OH group or a monovalent organic radical, when y = 0, there

being at least one OH group present per molecule,
v = 0 to 200,
w = 0 or 1,
x = 0 or 1,
y = 0 or 1,
z = 0 to 200
and the sum of (w + x + y) = 1 to 3 and when z = 0, $R^1$ and/or $R^7$ are

$$[R^4]_w\text{-}[R^5]_x\text{-}[R^6]_y\text{-}R^8$$

and, when x = 0, then w = 0 as well.

**6.** Process for preparing a surface-modified semi-gel according to any of Claims 1 to 4,
**characterized**
**in that** the surface of a semi-gel is contacted with at least one organopolysiloxane and/or at least one modified organopolysiloxane, preferably an organopolysiloxane and/or at least one modified organopolysiloxane according to any of Claims 2 to 5.

**7.** Process according to Claim 6,
**characterized**
**in that** the surface modification takes place before and/or after and/or simultaneously with a grinding operation, using preferably an air-jet or steam-jet mill or opposed-jet fluidized-bed mill.

**8.** Process according to either of Claims 5 and 6, **characterized**
**in that** the organopolysiloxane is added in pure, undiluted form or in dilute form as an aqueous emulsion.

**9.** Process according to any of Claims 6 to 8, **characterized**
**in that** starting material used is a semi-gel having the following physicochemical properties:

- BET surface area of 200 to 400 $m^2/g$, preferably of 210 to 350 $m^2/g$,
- mesopore volume for pores having a diameter of 2 - 30 nm of 0.95 to 1.5 ml/g, preferably of 1.0 to 1.4 ml/g,
- mesopore volume for pores having a diameter of 2 - 50 nm of 1.2 to 1.8 ml/g, preferably of 1.3 to 1.7 ml/g,
- pore maximum in the range from 10 to 50 nm, preferably from 15 to 45 nm.

**10.** Process according to any of Claims 6 to 9,
**characterized**
**in that** the semi-gel is mixed with 0.2% to 12% by weight, more preferably 1% to 10% by weight, very preferably 2% to 8% by weight, and especially preferably 3% to 8% by weight of the organopolysiloxane or of the modified organopolysiloxane, relative to the semi-gel.

**11.** Process according to any of Claims 6 to 10,
**characterized**
**in that** the surface-modified semi-gel is dried, preferably by means of spray dryers or grinding dryers or pneumatic dryers or spin-flash dryers.

**12.** Use of a surface-modified semi-gel according to any of Claims 1 to 5 or produced according to any of Claims 6 to 11 as a matting agent in paints and coatings, as a constituent of paper coatings, as a defoamer formulation, as a reinforcing agent in silicone rubber and/or in plastics applications as an antiblocking agent.

**13.** Coating formulation comprising surface-modified semi-gel according to at least one of Claims 1 to 5 or produced according to any of Claims 6 to 11.

## Revendications

**1.** Semi-gel modifié en surface, le semi-gel étant un dioxyde de silicium amorphe, **caractérisé en ce qu'**au moins des parties de la surface du semi-gel sont modifiées par au moins un organopolysiloxane et/ou au moins un organopolysiloxane modifié, et qu'il présente

- une surface BET de 200 à 400 $m^2/g$,
- un volume de mésopores, pour des pores présentant un diamètre de 2-30 nm, de 0,7 à 1,5 ml/g,
- un volume de mésopores, pour des pores présentant un diamètre de 2-50 nm, de 0,9 à 1,8 ml/g,
- un maximum de pores de la plage de 10 à 50 nm.

**2.** Semi-gel modifié en surface selon la revendication 1, **caractérisé en ce qu'**il présente

- une surface BET de 200 à 350 $m^2/g$, de préférence de 200 à 300 $m^2/g$.
- un volume de mésopores, pour des pores présentant un diamètre de 2-30 nm, de 0,95 à 1,4 ml/g, de préférence de 1,0 à 1,3 ml/g,
- un volume de mésopores, pour des pores présentant un diamètre de 2-50 nm, de 1,0 à 1,7 ml/g, de préférence de 1,1 à 1,6 ml/g,
- un maximum de pores dans la plage de 15 à 45 nm, de préférence de 15 à 40 nm et de manière tout particulièrement préférée de 20 à 35 nm.

**3.** Semi-gel modifié en surface selon l'une quelconque des revendications 1 ou 2, **caractérisé en ce que** la surface du semi-gel est couverte par un polyorganosiloxane présentant la structure générale suivante :

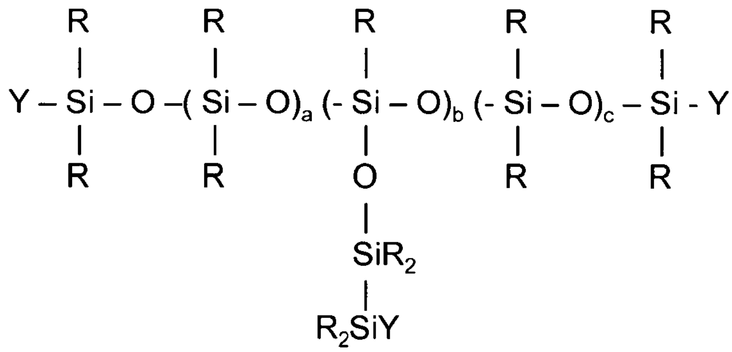

où

Y = -OH, -OR ou
Y = $H_5C_2$-O-$(C_2H_4O)_m$-, $H_7C_3$-O-$(C_3H_6O)_m$- ou

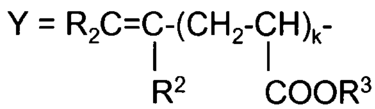

R = alkyle, en particulier méthyle ou éthyle,
$R^2$ = alkyle ou H,
$R^3$ = alkyle,
$R^4$ = H ou alkyle,
a = 0-100,
b = 0-100,
c = 0-100,
d = 0-100,
la somme a + b + c + d est égale ou différente de 0,
m = 0-100 et k = 0-100.

**4.** Semi-gel modifié en surface selon la revendication 1 ou 2, **caractérisé en ce que** la surface d'un semi-gel est couverte par un polyorganosiloxane présentant la structure générale suivante :

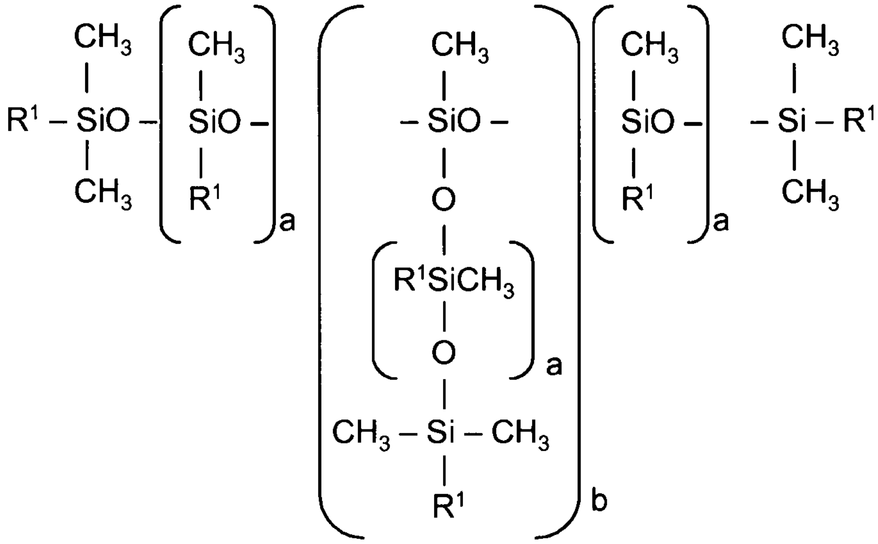

où
$R^1$ = un radical méthyle ou

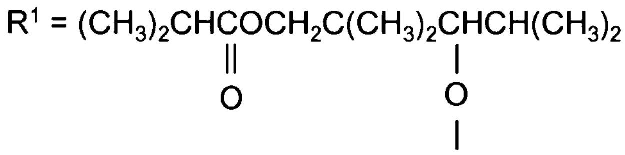

et/ou

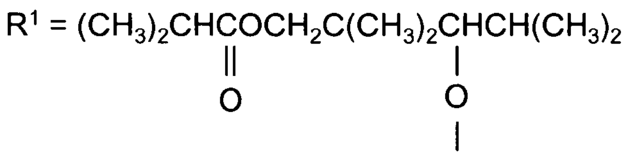

la somme des unités a = 0 à 100, la somme des unités b = 0 à 15, le rapport, pour les radicaux $R^1$, des radicaux méthyle à alcoxy étant inférieur à 50:1 et b > 1, lorsque a = 0 et a > 5, lorsque b = 0.

**5.** Semi-gel modifié en surface selon la revendication 1 ou 2, **caractérisé en ce que** la surface d'un semi-gel a été revêtue par un polymère de silicium-polyéther-acrylate ou de silicium-polyéther-méthacrylate, de préférence un ester d'acide acrylique et/ou un ester d'acide méthacrylique de siloxanes à fonctionnalité hydroxy et/ou de siloxanes modifiés par polyoxyalkylène, de manière particulièrement préférée par des organopolysiloxanes, qui sont obtenus par estérification ou transestérification d'acide acrylique et/ou d'acide méthacrylique ou d'esters de l'acide acrylique et/ou d'esters de l'acide méthacrylique en présence d'une enzyme catalysant l'estérification ou la transestérification avec des dérivés de siloxane à fonctionnalité hydroxy et/ou modifiés par polyoxyalkylène de formule générale (I)

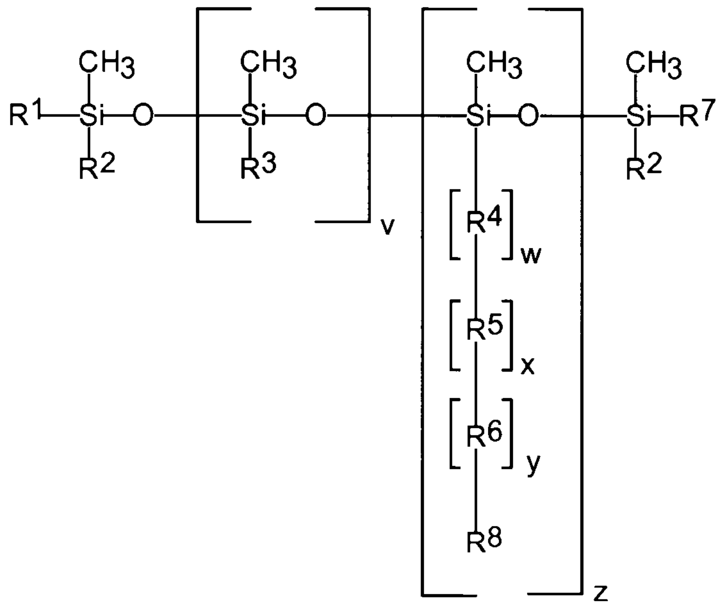

(I)

où

$R^1$ et/ou $R^7$ = $R^2$ ou $[R^4]_w$-$[R^5]_x$-$[R^6]_y$-$R^8$,

$R^2$ = $R^3$ ou $\neq R^3$ représente des radicaux alkyle ou alkylène identiques ou différents comprenant 1 à 24 atomes de carbone ou des radicaux phényle le cas échéant substitués comprenant jusqu'à 24 atomes de carbone,

$R^4$ = un radical divalent de formule O, NH, $NR^2$, S ou un radical de formule $(OSi(CH_3)_2)_u$,

u = 1 à 200,

$R^5$ = des radicaux alkyle ou alkylène identiques ou différents comprenant 1 à 24 atomes de carbone, ou $C_nH_{2n-f}R^2{}_f$-$R^4$-$C_mH_{2m-g}R^2{}_g$, où

f = 0 à 12,

g = 0 à 12,

n = 1 à 18,

m = 1 à 18,

$R^6$ = O-$(C_2H_{4-a}R^2{}_aO)_b(C_cH_{2c}O)_d$, où

a = 0 à 3,

b = 0 à 100,

c = 2 à 12,

d = 0 à 100,

la somme (b + d) = 1 à 200

et l'ordre des différents segments de polyoxyalkylène $(C_2H_{4-a}R^2{}_aO)_b$ et $(C_cH_{2c}O)_d$ pouvant être quelconque et comprenant en particulier des copolymères à blocs, tels que des polymères statistiques et leurs combinaisons, ou

$R^6$ = $O_e$-$C_hH_{2h}$-$C_iH_{2i-j}R^9{}_j$, où

e = 0 ou 1,

h = 0 à 24,

i = 0 à 24,

j = 1 à 3,

la somme (w + e) = 0 à 1

et $R^9$ signifie à chaque fois un radical divalent de formule O, un groupe hydroxy, un radical de formule $C_hH_{2h}$ ou un radical de formule $C_kH_{2k-1}(OH)_l$, où k = 0 à 24 et

l = 1 à 3,

$R^8$ = un radical hydrogène ou un radical organique monovalent lorsque y vaut 1, au moins un radical hydrogène devant être présent par molécule, ou un groupe OH ou un radical organique monovalent lorsque y = 0, au moins un groupe OH étant présent par molécule,

v = 0 à 200,

w = 0 ou 1,

x = 0 ou 1,
y = 0 ou 1,
z = 0 à 200
et la somme (w + x + y) = 1 à 3
et lorsque z = 0, $R^1$ et/ou $R^7$ représente $[R^4]_w$-$[R^5]_x$-$[R^6]_y$-$R^8$
et lorsque x = 0, w = également 0.

6. Procédé pour la préparation d'un semi-gel modifié en surface selon l'une quelconque des revendications 1 à 4, **caractérisé en ce que** la surface d'un semi-gel est mise en contact avec au moins un organopolysiloxane et/ou au moins un organopolysiloxane modifié, de préférence un organopolysiloxane et/ou au moins un organopolysiloxane modifié selon l'une quelconque des revendications 2 à 5.

7. Procédé selon la revendication 6, **caractérisé en ce que** la modification en surface a lieu avant et/ou après et/ou simultanément avec un broyage, un broyeur à jet d'air ou un broyeur à jet de vapeur ou un broyeur à jets opposés en lit fluidisé étant de préférence utilisé.

8. Procédé selon l'une quelconque des revendications 5 ou 6, **caractérisé en ce que** l'organopolysiloxane est ajouté sous forme non diluée, en tant que substance pure, ou sous forme diluée, en tant qu'émulsion aqueuse.

9. Procédé selon l'une quelconque des revendications 6 à 8, **caractérisé en ce qu'**on utilise, comme matériau de départ, un semi-gel présentant les propriétés physico-chimiques suivantes :

- une surface BET de 200 à 400 $m^2$/g, de préférence de 210 à 350 $m^2$/g.
- un volume de mésopores, pour des pores présentant un diamètre de 2-30 nm, de 0,95 à 1,5 ml/g, de préférence de 1,0 à 1,4 ml/g,
- un volume de mésopores, pour des pores présentant un diamètre de 2-50 nm, de 1,2 à 1,8 ml/g, de préférence de 1,3 à 1,7 ml/g,
- un maximum de pores de la plage de 10 à 50 nm, de préférence de 15 à 45 nm.

10. Procédé selon l'une quelconque des revendications 6 à 9, **caractérisé en ce que** le semi-gel est mélangé avec 0,2 à 12% en poids, de manière particulièrement préférée avec 1 à 10% en poids, de manière tout particulièrement préférée avec 2 à 8% en poids et de manière tout à fait préférée avec 3 à 8% en poids de l'organopolysiloxane ou de l'organopolysiloxane modifié, par rapport au semi-gel.

11. Procédé selon l'une quelconque des revendications 6 à 10, **caractérisé en ce que** le semi-gel modifié en surface est séché, de préférence au moyen d'un sécheur à pulvérisation ou d'un sécheur par broyage ou d'un sécheur à flux ou d'un sécheur centrifuge instantané.

12. Utilisation d'un semi-gel modifié en surface selon l'une quelconque des revendications 1 à 5 ou préparé selon l'une quelconque des revendications 6 à 11 comme agent de matage dans des encres et des laques, comme constituant de revêtements de papier, comme formulation antimousse, comme agent de renforcement dans le caoutchouc de silicium et/ou dans des utilisations de matériau synthétique comme agent antiadhésif.

13. Formulation de laque contenant le semi-gel modifié en surface selon au moins l'une quelconque des revendications 1 à 5 ou préparé selon l'une quelconque des revendications 6 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4097303 A
- DE 4132230
- EP 0384226 A
- GB 1219877 A
- GB 1279250 A
- WO 9825851 A
- EP 0588497 A
- EP 0765764 A
- WO 00002814 A
- US 4285846 A
- EP 0442325 A
- WO 200342293 A
- WO 9951692 A
- DE 102004029069
- DE 102004012090
- EP 1607448 A
- DE 3627782 A1


### In der Beschreibung aufgeführte Nicht-Patentliteratur


- **ILER.** *Chemistry of Silica,* 1979, 462 ff
- **S. BRUNAUER ; P.H. EMMETT ; E. TELLER.** *J. Am. Chem. Soc.,* 1938, vol. 60, 309
- **E. P. BARRET ; L. G. JOYNER ; P. H. HALENDA.** *J. Amer. Chem. Soc.,* 1951, vol. 73, 373